(19) **Europäisches Patentamt / European Patent Office / Office européen des brevets**

(11) **EP 4 085 282 B1**

(12) **FASCICULE DE BREVET EUROPEEN**

(45) Date de publication et mention de la délivrance du brevet:
**31.01.2024 Bulletin 2024/05**

(21) Numéro de dépôt: **20851225.1**

(22) Date de dépôt: **23.12.2020**

(51) Classification Internationale des Brevets (IPC):
**G02B 5/20** *(2006.01)* **B32B 3/26** *(2006.01)*
**B32B 17/10** *(2006.01)* **B60J 1/00** *(2006.01)*
**G01S 17/00** *(2020.01)* **C03C 4/10** *(2006.01)*

(52) Classification Coopérative des Brevets (CPC):
(C-Sets disponibles)
**G02B 5/208; B32B 3/266; B32B 17/10036; B32B 17/1011; B32B 17/10119; B32B 17/10211; B32B 17/10293; B32B 17/10348; B32B 17/10385; B32B 17/10651; B32B 17/10761; B32B 27/308; B32B 27/36; B32B 27/365; C03C 4/10;** (Cont.)

(86) Numéro de dépôt international:
**PCT/FR2020/052614**

(87) Numéro de publication internationale:
**WO 2021/136907 (08.07.2021 Gazette 2021/27)**

(54) **VITRAGE FEUILLETE DE VEHICULE ET DISPOSITIF AVEC SYSTEME DE VISION PROCHE INFRAROUGE ASSOCIE ET SA FABRICATION**

LAMINIERTE FAHRZEUGVERGLASUNG, ZUGEHÖRIGE VORRICHTUNG, DIE EIN NAHINFRAROT-SICHTSYSTEM AUFWEIST, UND PRODUKTION DAVON

LAMINATED VEHICLE GLAZING, ASSOCIATED DEVICE HAVING A NEAR-INFRARED VISION SYSTEM, AND PRODUCTION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.01.2020 FR 2000022**

(43) Date de publication de la demande:
**09.11.2022 Bulletin 2022/45**

(73) Titulaire: **Saint-Gobain Glass France**
**92400 Courbevoie (FR)**

(72) Inventeurs:
• **DAVIS, Claire**
  **60200 Compiegne (FR)**
• **YAVARI, Keihann**
  **60280 Margny-Les-Compiegne (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2018/178286    WO-A1-2020/214431**
**CN-A- 111 409 314    DE-U1-202019 103 729**
**US-A1- 2019 039 353    US-B1- 10 373 731**

(52) Classification Coopérative des Brevets (CPC):
(Cont.)
**C03C 27/10; G01S 7/4813; G01S 17/931;**
B32B 2605/08

C-Sets
**B32B 17/10005, B32B 2323/04;**
**B32B 17/10005, B32B 2367/00**

**EP 4 085 282 B1**

**Description**

L'invention se rapporte à un vitrage feuilleté, en particulier un pare-brise, dans un véhicule notamment routier, de train en association avec un système de vision dans le proche infrarouge. L'invention décrit également un dispositif combinant ledit vitrage et le système de vision proche infrarouge ainsi que le procédé de fabrication du vitrage feuilleté.

Les vitrages pour véhicules autonomes et la technologie associée évoluent constamment, notamment pour améliorer la sécurité.

La télédétection par laser ou LIDAR, acronyme de l'expression en langue anglaise « light détection and ranging » ou « laser détection and ranging » (soit en français « détection et estimation de la distance par la lumière » ou « par laser ») est utilisée dans des véhicules au niveau des phares ou du toit.

Plus récemment la demande de brevet WO20180153012 propose de placer un LIDAR fonctionnant dans le proche infrarouge entre 750nm et 1050nm derrière le pare-brise feuilleté comportant deux feuilles de verre extraclair et un filtre infrarouge éliminé dans la zone vue par le LIDAR.

Les performances de ce dispositif (vitrage associé au LIDAR peuvent être améliorées.

Un vitrage feuilleté de véhicule est connu du document US 2019/039353 A1.

Plus précisément, la présente invention se rapporte à un vitrage feuilleté (et de préférence bombé) de véhicule notamment routier (voiture, camion, transport en commun : bus, car etc) ou ferroviaire (en particulier à vitesse maximale d'au plus 90km/h ou d'au plus 70km/h, en particulier les métros, tramway), en particulier un parebrise, ou encore une lunette arrière, voire un vitrage latéral, d'épaisseur E1 donnée par exemple subcentimétrique notamment d'au plus 5mm pour un pare-brise de véhicule routier, en particulier voiture, vitrage comportant :

- une première feuille de verre, notamment bombée, destinée à être le vitrage extérieur, avec une première face principale externe F1 et une deuxième face principale interne F2 (orientée vers l'habitacle), si véhicule automobile d'épaisseur de préférence d'au plus 4mm, et même d'au plus 3mm ou 2,5mm, - notamment 2,1 mm, 1,9mm, 1,8mm, 1,6mm et 1,4mm- et de préférence d'au moins 0,7mm ou 1mm
- un intercalaire de feuilletage (mono ou multifeuillet), éventuellement neutre, clair, extraclair ou teinté notamment gris ou vert, en matière polymère de préférence thermoplastique et mieux encore en polyvinylbutyral (PVB), de préférence si véhicule routier d'épaisseur E3 d'au plus 1,8mm, mieux d'au plus 1,2mm et même d'au plus 0,9mm (et mieux d'au moins 0,3mm et même d'au moins 0,6mm), l'intercalaire de feuilletage étant éventuellement acoustique et/ou ayant éventuellement une section transversale diminuant en forme en coin du haut vers le bas du vitrage feuilleté (en particulier un parebrise) notamment pour un affichage tête haute (HUD pour Head Up Display en anglais), intercalaire de feuilletage avec une face principale FA orientée vers F2 et avec une face principale FB opposée à FA
- une deuxième feuille de verre ou plastique destinée à être le vitrage intérieur, de préférence bombée et en particulier teintée, avec une troisième face principale F3 côté F2 et une quatrième face principale interne F4 (orientée vers l'habitacle), si véhicule routier d'épaisseur E2 de préférence inférieure à celle du premier vitrage, dans le cas du verre même d'au plus 3mm ou 2mm - notamment 1,9mm, 1,8mm, 1,6mm et 1,4mm- ou même d'au plus 1,3mm, et de préférence d'au moins 0,7mm, l'épaisseur des première et deuxième feuilles étant de préférence strictement inférieure à 5 ou 4mm, même à 3,7mm.

Selon l'invention la première feuille de verre présente une teneur pondérale en oxyde de fer total d'au plus 0,05%.

Notamment la deuxième feuille de verre ou plastique est susceptible d'absorber (significativement) dans le proche infrarouge par exemple la deuxième feuille est en verre et présente une teneur pondérale en oxyde de fer total d'au moins 0,4%.

Aussi, la deuxième feuille (de verre ou plastique) présente un trou traversant dans l'épaisseur notamment de largeur W1 au moins centimétrique et de préférence d'au plus 25cm ou mieux d'au plus 15cm, encore mieux d'au plus 5cm pour une meilleure tenue mécanique, notamment de section trapézoïdale ou rectangulaire, ou circulaire. Eventuellement l'intercalaire de feuilletage (incolore, etc) présente un trou partiel ou traversant dans l'épaisseur de préférence au moins prolongeant le trou traversant de la deuxième feuille, éventuellement plus large notamment d'au plus 10mm ou plus étroit d'au plus 3mm ou 1mm, notamment de section trapézoïdale, ou rectangulaire ou circulaire etc (notamment de même forme et même homothétique à la section du trou traversant du verre).

Le vitrage selon l'invention présente sous ledit trou traversant de la deuxième feuille, de préférence du côté de la face F2, un filtre sélectif, absorbant dans le visible et transparent à au moins une longueur d'onde dite de travail dans l'infrarouge dans une gamme allant de 800nm à 1800nm, notamment $905\pm5$nm et/ou $1550\pm5$nm et/ou encore $850\pm5$nm.

En face dudit trou traversant, le vitrage feuilleté (au moins l'ensemble comprenant la première feuille de verre, l'éventuel intercalaire de feuilletage, le filtre sélectif) présente :

- une transmission totale d'au moins 80,0%, 90,0%, ou 95,0% à la longueur d'onde de travail, de préférence mesurée à 90° ou même de préférence aussi à 60° ou même jusqu'à 60° par rapport au plan (local) de la première feuille par exemple côté face F2 (habitacle) et/ou côté face F1
- une transmission totale d'au plus 10,0%, 5,0%, ou 1,0% ou 0,5% dans le visible (notamment au moins à une valeur de référence de 550nm +-50nm ou dans une gamme allant de 500 à 600 nm ou entre 400 et 700nm) mesurée à 90°ou même de préférence aussi à 60° ou même jusqu'à 60° côté face F1, mieux au moins dans une gamme allant de 500 à 600 nm ou entre 400 et 700nm même dans toute la gamme du visible entre 390nm et 750nm, notamment 0,5% sur 390-750nm, et 0,1% sur 390-600nm, en particulier le filtre sélectif masquant (significativement) le trou traversant vu de la face 1.

De préférence, le filtre sélectif est lié (collé, en contact adhésif) à la face F2 (liaison avant) ou à la face F3 (liaison arrière) ou les deux, plutôt que plaqué contre la face F2 et/ou contre la face F3.

Ainsi selon l'invention, pour atteindre un niveau élevé de transmission on sélectionne :

1) un verre extérieur extraclair dans le proche infrarouge visé,
2) un verre intérieur plus absorbant dans le proche infrarouge visé et nécessairement évidé

Cette solution est plus performante que celle de l'art antérieur basée sur deux verres extraclairs pleins.

En outre en évitant l'usage d'un deuxième verre extraclair, elle améliore le confort (chaleur dans le véhicule) et l'esthétique et est plus économique.

La forme et les dimensions du trou traversant sont configurées selon les techniques de l'art de manière à transmettre et collecter efficacement et sélectivement l'ensemble des rayonnements traversant le vitrage (pare-brise, lunette etc).

Par exemple le trou est de même forme que le système de vision infrarouge tel que le LIDAR.

Le trou (ouvert ou fermé) peut être notamment de section droite convexe en particulier trapézoïdale de préférence, ou encore circulaire ou ovale ou ellipsoïdale ou encore rectangulaire, carrée...

Le trou a notamment une dimension définie par le champ de vision du LIDAR en fonction de son positionnement.

Le trou traversant de la deuxième feuille (de verre ou plastique) peut être libre ou occupé tout ou partie par exemple par une matière de remplissage transparente à la longueur d'onde de travail, et/ou occupé par une insertion d'une partie du LIDAR.

Le trou traversant peut être :

- trou fermé (entouré par la paroi de la deuxième feuille de verre ou plastique), donc au sein du vitrage notamment espacé de la tranche du vitrage la plus proche d'au moins 3cm ou 5cm
- ouvert ou débouchant, formant une encoche (périphérique).

Le vitrage peut comporter un trou traversant total composé :

- d'un trou traversant dans l'intercalaire de feuilletage (mono ou multi feuillets) de largeur D1
- et dudit trou traversant dans la deuxième feuille de verre ou plastique de largeur W1 Les premier et deuxième trous sont d'axe de symétrie confondu ou proche et de préférence de largeur identique (avant et/ou après feuilletage).

Le trou traversant est destiné à être positionné dans le trajet optique du système de vision infrarouge.

Le filtre sélectif sert à cacher le système de vision infrarouge à ladite longueur d'onde de travail tel qu'un LIDAR de l'extérieur du véhicule sans pénaliser l'excellente transmission à la longueur d'onde de travail.

L'invention convient tout particulièrement pour les vitrages (pare-brise, lunette etc) aux véhicules autonomes ou semi autonome : niveau L2+, L3, L4 et L5 (« full » autonome donc autonome) ainsi que les véhicules type Robot Taxi et navette (Shuttle) etc.

L'oxyde de fer, présent comme impureté dans la plupart des matières premières naturelles utilisées en verrerie (sable, feldspath, calcaire, dolomie...), absorbe à la fois dans le domaine du visible et proche ultraviolet (absorption due à l'ion ferrique $Fe^{3+}$) et surtout dans le domaine du visible et proche infrarouge (absorption due à l'ion ferreux $Fe^{2+}$) c'est pourquoi on réduit l'oxyde de fer dans la première feuille de verre.

Dans la deuxième feuille de verre (si en verre), on peut donc choisir une teneur en oxyde de fer plus élevée.

L'angle du vitrage notamment un pare-brise de véhicule routier peut être typiquement entre 21° et 36° par rapport au sol et en moyenne de 30°. Aussi, une haute transmission à 60° est particulièrement avantageuse car c'est l'angle d'incidence du faisceau du LIDAR sur le parebrise si celui-ci est à 30° du sol.

La transmission dans l'infrarouge est mesurée par exemple avec un spectromètre Fourier tel que le Bruker-Vertex-70.

Pour quantifier la transmission du verre dans le domaine du visible, on définit souvent un facteur de transmission lumineuse, appelée transmission lumineuse, souvent abrégée « $T_L$ », calculé entre 380 et 780 nm et ramené à une épaisseur de verre de 3,2 mm ou 4 mm, selon la norme ISO 9050 :2003, en prenant donc en considération l'illuminant D65 tel que défini par la norme ISO/CIE 10526 et l'observateur de référence colorimétrique C.I.E. 1931 tel que défini par la norme ISO/CIE 10527.

Naturellement la transmission lumineuse $T_L$ du vitrage feuilleté dans une zone sans trou (zone centrale du pare-brise) est de préférence d'au moins 70% ou 75%, 80% ou 85%, 88%.

Ledit filtre sélectif est par exemple local de surface S0 donnée et la projection orthogonale de la surface S0 sur la deuxième feuille englobe au moins la section Sc du trou traversant.

Le filtre sélectif est par exemple une couche pleine voire même avec des discontinuités par exemple formant une (micro ou nano)grille.

Le filtre sélectif peut être de toute nature : revêtement (encre, vernis etc), film flexible, il peut être localisé au niveau dudit trou traversant ou plus étendu par exemple pour cacher un ou d'autres capteurs comme détaillé plus tard.

Le filtre sélectif est (principalement) dans une zone avec une seule feuille de verre.

L'intégration du filtre sélectif sous le trou en particulier son collage sera décrite en détail ci-après afin d'éviter la création de défauts optiques (distorsion etc) en particulier par plissement, délamination ou apparition de bulles ou pour faciliter son positionnement précis ou la rapidité de son installation industriellement.

Pour un filtre sélectif impliquant un film polymère on préfère qu'il soit en contact adhésif avec la face F2 ou avec l'intercalaire de feuilletage.

Le trou traversant est de préférence fermé (par opposition à débouchant comme une cavité pratiquée dans la tranche de la deuxième feuille) notamment espacé de la tranche de la deuxième feuille d'au moins 2cm/5cm/10cm ou plus encore.

Le filtre sélectif peut dépasser au-delà du trou traversant par exemple d'au plus 50mm ou mieux d'au plus 20mm entre la face F2 et la face F3 dans une zone (vitrée) dite zone de bordure dudit trou et d'avoir une forme différente pour le filtre et le trou traversant par exemple

Le filtre va cacher le trou et le LIDAR mais on peut aussi souhaiter couvrir une zone dépourvue de couche de masquage opaque (absorbant à la longueur d'onde de travail) par exemple une épargne de cette couche ou encore une zone contiguë ou au voisinage.

Le filtre peut donc masquer en particulier d'une zone dite zone caméra pourvue de capteur(s) en particulier une caméra dans le visible ou dans l'infrarouge lointain (caméra thermique). Toutefois pour ce faire, le filtre sélectif présente une épargne (fermée ou débouchante) dans la zone prévue pour laisser passer les rayons lumineux issue de la scène à capter par la caméra visible ou thermique.

Le filtre sélectif peut avoir un contour fermé, entourant le trou (présent sur tout le pourtour du trou fermé) par exemple de forme similaire ou homothétique au trou. Le filtre sélectif peut aussi être une forme simple géométrique (rectangle etc) dans laquelle s'inscrit le trou fermé.

Le trou traversant avec la section Sc constante ou variable, notamment trapézoïdale ou rectangulaire ou en disque ou ovale, est par exemple de plus petite dimension (diamètre) d'au moins 2cm, 3cm, 5cm et de préférence de plus grande dimension d'au plus 30cm ou 25cm.

Dans ledit trou traversant, il peut y avoir un insert de préférence de largeur d'au plus 1cm notamment en matière polymère. L'insert est monté au moins sur la paroi de la deuxième feuille de verre ou plastique délimitant le trou. Cet insert sera aussi caché par le filtre sélectif.

Pour ne pas identifier la zone LIDAR, le filtre sélectif ne forme pas de préférence une zone (sensiblement) opaque isolée (visible, identifiable depuis la face F1), adjacente à une zone transparente du vitrage feuilleté sur tout ou partie de son pourtour. Le filtre sélectif peut donc

- s'intégrer à une zone de masquage /décorative (comme celle habituelle en périphérie du vitrage) pourvu d'une épargne (débouchante ou fermée)
- être adjacente à cette zone de masquage
- et/ou s'étendre pour former tout ou partie de cette zone décorative.

Avantageusement :

- le filtre sélectif s'étend au-delà dudit trou traversant, de l'extérieur prolonge une couche de masquage ou masque une épargne d'une couche de masquage périphérique,
- le filtre sélectif s'étend au-delà dudit trou traversant, notamment de l'extérieur prolonge une couche de masquage ou masque une épargne d'une couche de masquage périphérique, le filtre sélectif présente au moins une ouverture ou discontinuité locale pour laisser passer les rayons lumineux notamment pour au moins un capteur additionnel en particulier capteur d'une caméra visible ou caméra thermique, en particulier caméra fixée à une platine en face F4 trouée pour laisser passer lesdits rayons lumineux ou électromagnétiques (caméra thermique).

Le filtre sélectif est défini par un L*1, a*1 b*1, définie dans l'espace chromatique L*a*b* CIE 1976. La couche de masquage de couleur C1 aussi est définie par un L*2, a*2 b*2 avec un écart colorimétrique $\Delta E^*$ donné par la formule suivante

$$\Delta E^* = \sqrt{(\Delta L^{*2} + \Delta a^{*2} + \Delta b^{*2})}.$$

De préférence $\Delta E^* < 4$, mieux $\Delta E^* < 2$ (l'œil humain discerne difficilement), encore mieux $\Delta E^* < 1$ (l'œil humain ne discerne pas).

Aussi avantageusement, le filtre sélectif est périphérique de surface S, le vitrage comporte de préférence une couche de masquage opaque périphérique absorbant davantage le proche infrarouge que le filtre sélectif) de surface S' qui est au voisinage ou dans la région dudit trou traversant et S' présentant alors une épargne au droit dudit trou traversant, la projection de S (couche de masquage décalée dudit trou traversant) ou S+S' (couche de masquage avec épargne) sur la face F1 est une zone, notamment une bande, opaque de masquage périphérique, notamment noire.

La couche de masquage opaque est notamment sous forme d'au moins un revêtement sur l'une des première et deuxième feuilles et/ou sur l'intercalaire de feuilletage.

La zone est par exemple une bande rectangulaire le long d'un bord du vitrage, notamment bord longitudinal en particulier d'un pare-brise. La bande est notamment un bandeau sous tout le long du bord et élargie dans la zone (notamment centrale) avec ledit trou traversant et le filtre sélectif le camouflant.

La couche de masquage peut être de part et d'autre du trou (fermé) et même entourer le trou (fermé).

L'épargne peut avoir un contour ouvert ou fermé, entourant le trou par exemple de forme similaire ou homothétique au trou.

Le filtre sélectif peut donc s'étendre au-delà du trou traversant.

Dans une première configuration, il s'étend (largement) au-delà dans une zone de bordure du trou (donc sous la deuxième feuille verre) pour former à lui seul un élément de masquage en particulier une bande de masquage périphérique et de préférence le long d'un bord longitudinal du vitrage, notamment bord longitudinal d'un pare-brise voire même un cadre de masquage.

Dans ce cas le filtre sélectif a double fonctionnalité et peut remplacer tout ou partie de l'émail opaque (en face F2 et/ou F3 et/ou F4) ou l'encre imprimé sur l'intercalaire de feuilletage traditionnellement utilisé.

Dans une deuxième configuration, le filtre sélectif reste local, s'étend au-delà du trou d'au plus 50mm, le vitrage comportant en outre la couche de masquage opaque, sous forme d'au moins un revêtement sur l'une au moins des première et deuxième feuilles et/ou sur l'intercalaire de feuilletage plutôt qu'un élément teinté en masse.

La couche de masquage et le filtre sélectif sont éventuellement dans des plans distincts et en dehors du trou traversant

- ils sont contiguës au sens où leurs tranches (celles au voisinage du trou traversant) sont alignées ou même leurs faces principales peuvent en partie se faire face (recouvrement latéral sur au plus 50mm)
- ou sont décalés (les tranches sont décalées, sans contiguïté ni recouvrement) d'au plus $100\mu$m pour maintenir cette impression visuelle de bande opaque continue (noire). En particulier, la tranche du filtre sélectif est espacée (laté-ralement) d'au plus $100\mu$m de l'épargne pour ne pas voir l'interruption de l'opacité à l'œil nu et la tranche de la couche de masquage formant le bord de l'épargne est espacé (latéralement) d'au plus $500\mu$m de la paroi du trou traversant si on veut limiter l'étendue du filtre sélectif.

Dans le cas spécifique ou la couche de masquage est une encre déposée (imprimée) sur l'intercalaire de feuilletage (PVB) on peut préférer que l'encre soit espacée du bord dudit trou traversant d'au moins 1cm pour éviter une délamination.

On peut préférer que la couche de masquage telle qu'un 'émail soit déposée en face 2 seulement plutôt que sur la deuxième feuille avec un trou traversant.

Dans le cas d'un trou réalisé avant dépôt de la couche de masquage sur verre en face F2 (sérigraphie d'émail), l'alignement au niveau du trou peut compliquer les étapes de réglage du procédé en début de production. Les contraintes générées durant la précuisson de l'émail (notamment lors du refroidissement) combinées aux défauts générés par la création du trou peuvent engendrer des casses à cette étape.

Dans le cas d'un trou réalisé après sérigraphie sur verre en face F3 ou F4, la présence de l'émail fragilise le verre ce qui peut compliquer la réalisation du trou.

Dans les deux cas, il est préférable que la couche de masquage sur verre (telle que l'émail) soit placée plus vers l'extérieur que les autres couches pour des raisons esthétiques (bord plus plaisant que le bord des autres couches)

Ainsi, dans une réalisation, le vitrage selon l'invention comporte une couche de masquage opaque sous forme d'au moins un revêtement sur l'une au moins des première et deuxième feuilles et/ou sur l'intercalaire de feuilletage; couche de masquage périphérique et dans la région dudit trou traversant, la couche de masquage présentant une épargne au droit dudit trou traversant et même éventuellement en bordure du trou traversant, le filtre sélectif étant en vis à vis de la couche de masquage opaque notamment avec un recouvrement sur au plus 50mm, 20mm, 10 mm, ou contiguë (les bords sont aboutés en projection sur F1) ou est décalé d'au plus 0,5$\mu$m ou d'au plus 150$\mu$m.

En particulier (en dehors dudit trou traversant, dans la zone de bordure), le filtre sélectif est en contact avec la couche de masquage et même le filtre sélectif est un revêtement sur la couche de masquage voire sous la couche de masquage.

On peut prévoir l'un des arrangements suivants.

En particulier, la couche de masquage est sur la face F2, le filtre sélectif est espacé et au-dessus de la couche de masquage sur la face F2 ou est en contact avec la couche de masquage notamment forme un revêtement sur la couche de masquage, notamment recouvrement sur au plus 50mm.

En particulier, le filtre sélectif est un revêtement sur la face F2 et est recouvert par la couche de masquage notamment recouvrement sur au plus 50mm.

En particulier, le filtre sélectif est un revêtement sur la face F2 et la couche de masquage est sur l'une des faces FA ou FB notamment recouvrement sur au plus 50mm.

En particulier, le filtre sélectif est un revêtement sur la face FA ou FB est recouvert par la couche de masquage, par exemple une encre, notamment recouvrement sur au plus 50mm

En particulier, le filtre sélectif est un revêtement sur l'une des faces FA ou FB et la couche de masquage est sur l'autre des faces FA ou FB notamment recouvrement sur au plus 50mm.

En particulier, le filtre sélectif est un revêtement sur l'une des faces F2, FA ou FB et la couche de masquage est sur la face F3 ou F4 notamment recouvrement (en projection) sur au plus 50mm.

La couche de masquage opaque est de préférence une couche continue (aplat avec un bord plein ou en variante un bord en dégradé (ensemble de motifs).

La couche de masquage peut être à 2mm ou 3mm (moins de 5mm) de la tranche du vitrage.

La couche de masquage peut être un bandeau encadrant le vitrage (pare-brise etc) notamment en émail noir. On crée donc une épargne dans cette couche de masquage Une autre couche de masquage peut être en face F3 ou F4.

Dans la zone de bordure du trou traversant, la face F3 nue ou revêtue d'un revêtement fonctionnel par exemple d'au plus 100$\mu$m, 1$\mu$m : couche de contrôle solaire, chauffante, électrode etc) est en contact adhésif avec

- a) la face FB de l'intercalaire de feuilletage à base de PVB
- b) ou d'une bande additionnelle dite bande arrière (de préférence de largeur au moins 10, 20mm, sur le pourtour si trou traversant fermé), bande arrière thermoplastique à base de PVB, bande arrière en contact/rejoignant l'intercalaire de feuilletage troué partiellement ou entièrement au droit du trou traversant avec un trou du PVB plus large que ledit trou traversant d'au moins 10, 20mm.

La face FB de l'intercalaire de feuilletage peut être trouée partiellement ou entièrement en épaisseur au droit du trou traversant, au niveau de la face F3 ledit trou étant selon une forme donnée (par exemple trapézoïdale) s'inscrivant dans un rectangle, avec un trou de l'intercalaire de feuilletage (PVB)

- plus large que ledit trou traversant (PVB en retrait)
- égal au trou traversant
- inférieure audit trou traversant d'au plus 5mm, 3mm, 1mm.

Le filtre sélectif est entre la face F2 et la face F3.

Sous ledit trou, le filtre sélectif peut comporter un film polymérique (flexible) d'épaisseur submillimétrique (pour éviter surépaisseur) et même d'au plus 0,5mm, 0,3mm ou 0,15mm contre la face F2 et lié à la face F2 dans la zone de bordure dudit trou.

Toutefois, pour éviter tout risque de distorsions optiques (présence de bulles etc) on préfère que dans la zone dudit trou traversant le filtre sélectif soit lié à la face F2 :

- soit le filtre sélectif comporte un film polymérique précité collé (par exemple un film comme un PET qui ne colle pas au verre même après feuilletage) ou en contact adhésif avec la face F2 (par exemple un matériau comme le PVB qui colle au verre après feuilletage)
- soit le filtre sélectif est un revêtement sur la face F2.

La face F2 en regard de la zone dudit trou traversant et de préférence dans une zone de bordure dudit trou traversant peut comporter au moins un film polymère comportant au moins deux fonctions, au moins de préférence par au moins un revêtement fonctionnel, choisies parmi les suivantes : filtre sélectif, chauffante, antireflet, anticasse.

Sous ledit trou traversant, le filtre sélectif est lié à la face F2, notamment collé ou en contact adhésif avec la face F2 nue ou avec un revêtement fonctionnel donc éventuellement collé sur ou en contact adhésif avec le revêtement fonctionnel Le filtre sélectif s'étend de préférence au-delà dudit trou traversant dans une zone de bordure dudit trou traversant et le filtre sélectif est lié à la face F2 nue ou revêtue (liaison dite avant) et de préférence à la face F3 nue ou revêtue (liaison dite arrière) L'intercalaire de feuilletage peut servir pour la liaison avant (filtre sélectif sous la face FA) ou pour la liaison arrière (filtre sélectif sous la face FB).

De préférence à des fins de protection mécaniques, il y a :

- un contact adhésif entre l'intercalaire de feuilletage et la face F3 jusqu'au bord dudit trou traversant
- ou un contact adhésif entre l'intercalaire de feuilletage (tel que PVB) et la face F3 jusqu'à proximité dudit trou traversant par exemple espacé d'au plus 10mm dudit trou traversant et dans la zone de bordure dudit trou traversant sans l'intercalaire, également un autre contact adhésif avec une matière plastique notamment thermoplastique telle que PVB sur le filtre sélectif ou un film polymère le couvrant. Et/ou de préférence il y a :
- un contact adhésif entre l'intercalaire de feuilletage et la face F2 jusqu'au bord dudit trou
- et en regard dudit trou un contact adhésif de la face F2 avec une matière thermoplastique (telle que PVB) ou une couche adhésive telle que PSA.

Le choix de la nature et/ou de l'épaisseur du ou des films polymère en face dudit trou traversant dépend notamment de la transparence à la longueur d'onde de travail, de la flexibilité et/ou de la ténacité recherchée.

Le ou les film(s) polymère selon l'invention peuvent s'adapter à la courbure de la première feuille, en particulier être souple (flexible ou semi-flexible).

Le ou les films polymère peut être, notamment, à base de polyester en particulier un polyéthylène téréphtalate (PET), polyéthylène naphtalate (PEN), de polycarbonate, un polyoléfine (polyéthylène, polypropylène), de polyuréthane, de polyméthacrylate de méthyle (PMMA), de polyamide, de polyimide, ou un polyvinyle chloride (PVC) voire de polymère fluoré tel que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP) ou un polystyrène (PS).

On préfère le PET (et l'intercalaire en PVB).

En particulier, dans une réalisation, le vitrage selon l'invention (notamment le filtre sélectif) comportant un film polymère, notamment PET, d'épaisseur submillimétrique de préférence d'au plus 0,5mm, 0,3mm, 0,15mm, film polymère en face dudit trou traversant- notamment faisant partie dudit filtre sélectif (film teinté ou film support d'une couche colorante-, qui comporte une face principale avant F'A côté F2 et une face principale arrière F'B opposée, film polymère transparent à ladite longueur d'onde de travail, film polymère qui est lié à la face F2 nue ou avec un revêtement fonctionnel (au moins) en face dudit trou traversant suivant l'une au moins des configurations suivantes :

  a) via une couche d'adhésion (transparente à la longueur d'onde de travail) de préférence qui est un adhésif sensible à la pression PSA, par exemple acrylate, ou thermofusible voire bicomposant ou UV

  b) via une bande locale polymère, dite bande avant, en contact adhésif avec la face F2 en face dudit trou traversant, notamment d'épaisseur submillimétrique E'3 (< E3) d'au plus 0,76mm, 0,5mm, 0,4mm, ou 0,15mm en particulier de 25 à 100µm, 40 à 70µm et même d'au plus 50µm, l'intercalaire de feuilletage de préférence à base de poly(vinyl butyral) étant éventuellement troué au droit du trou traversant, la bande avant est de préférence en contact (adhésif) avec l'intercalaire de feuilletage

  c) via l'intercalaire (en face dudit trou traversant et même dans la zone de bordure dudit trou traversant), de préférence l'intercalaire étant PVB (incolore, acoustique etc), avec la FA ayant un trou borgne éventuel d'accueil de film(s), et de préférence il y a un film polymère de protection sur la face FB.

Ce film polymère peut être sous le filtre sélectif (en film), couvrir le filtre sélectif qui est notamment sous forme d'un revêtement en face F2 ou en film, ou faire partie dudit filtre sélectif.

On préfère une couche d'adhésion (ou colle) transparente à la longueur d'onde de travail.

Le PVB est transparent à la longueur d'onde de travail.

Dans le cas a) on peut préférer préassembler le film (filtre) sélectif avec la couche d'adhésion (diélectrique etc) qui est par exemple protégée par un film amovible (liner) à retirer avant positionnement entre les première et deuxième feuilles Il existe plusieurs types d'adhésifs. Des adhésifs thermofusibles (hotmelt) qu'il faut faire fondre et qui collent quand ils durcissent, des thermodurcissables qui durcissent lorsque leurs composants réagissent ou lorsqu'un solvant s'évapore, des adhésifs sensibles à la pression PSA qui collent tout de suite, par simple contact.

Selon l'invention, la colle PSA (sur face F2, F3, entre films, sur intercalaire comme PVB) peut être par exemple d'épaisseur d'au plus 50μm (type ruban adhésive) en particulier d'au plus 20μm si dépôt par voile liquide.

La couche d'adhésion peut être une feuille d'adhésif sensible à la pression.

La couche d'adhésion (non adhésive) peut être par exemple un gel en particulier un hydrogel à base de polyacrylamide, polyvinyl alcool, polyuréthane, polysaccharide, polyéthylène glycol, acide polylactique, silicone.

La couche d'adhésion peut même être un adhésif sensible à la pression. Un adhésif sensible à la pression, abrégé PSA et communément appelé auto-adhésif, est un adhésif qui forme une liaison lorsqu'une pression lui est appliquée de manière à solidariser l'adhésif avec la surface à coller. Aucun solvant, ni d'eau, ou de chaleur n'est nécessaire pour activer l'adhésif. Il est utilisé dans des garnitures d'automobile, et dans une grande une grande variété d'autres produits.

Comme son nom l'indique "sensible à la pression", le degré de liaison entre une surface donnée et le liant autoadhésif est influencée par la quantité de pression utilisée pour appliquer l'adhésif sur la surface cible. D'autres facteurs interviennent également et sont importants pour une bonne adhérence telle que la douceur, l'énergie de surface, et l'élimination des contaminants.

Les PSA sont généralement conçus pour former une liaison et maintenir celle-ci à la température ambiante. L'homme de l'art veillera à choisir une formulation d'adhésif autoadhésif adaptée aux conditions de son utilisation. En effet, les PSA généralement voient leur adhérence se réduire ou disparaitre à basse température et voient leur capacité à tenir le cisaillement se réduire à températures élevées.

Les PSA sont généralement à base d'élastomère couplé avec un agent adhésif supplémentaire approprié ou agent « tackifiant » (par exemple, une résine ester).

Les élastomères peuvent être à base:

- d'acrylates, qui peuvent être suffisamment collant pour ne pas exiger un agent tackifiant supplémentaire.
- de nitriles
- de silicone, requérant des agents tackifiants spéciaux telles que des résines de silicate de type « MQ », composées de triméthyle silane monofonctionnel ("M") qui a réagi avec tétrachlorure de silicium quadrifonctionnel ("Q"). Les PSA à base de silicone sont par exemple des gommes et résines de polydiméthylsiloxane dispersées dans du xylène ou un mélange de xylène et toluène.
- des copolymères blocs à base de styrène tel que des copolymères blocs Styrène butadiène -styrène (SBS), Styrène-éthylène / butylène -styrène (SEBS), styrène-éthylène / propylène (SEP), Styrène isoprène -styrène (SIS),
- les éthers vinyliques.

Avantageusement, l'adhésif sensible à la pression est choisi parmi les PSA à base d'acrylates et les PSA à base de silicone.

Ces adhésifs sont commercialisés sous forme de rouleaux d'adhésifs double face. On peut citer comme PSA à base de silicone les adhésifs de Dow Corning® tel que le 2013 Adhesive, 7657 Adhesive, Q2-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive.

On peut prévoir donc les configurations suivantes d'empilement (formant un élément préassemblé de préférence) directement sur la face F2 (élément entre parenthèses optionnels):

- couche d'adhésion tel que PSA /film polymère teinté en masse(/adhésif tel que PSA//film AR)
- couche d'adhésion tel que PSA /film polymère teinté en masse(/revêtement AR)
- couche d'adhésion tel que PSA /film polymère avec revêtement colorant sur l'une au moins des faces principales/(adhésif (PSA etc) /film AR
- couche d'adhésion tel que PSA /film polymère avec revêtement colorant sur l'une au moins des faces principales/ (/ revêtement AR)

ou sur la couche colorante :

- couche d'adhésion tel que PSA /film polymère de protection ou chauffant/ adhésif tel que PSA/) film AR
- couche d'adhésion tel que PSA /film polymère de protection ou chauffant/ adhésif tel que PSA/) film AR.

Dans le cas b) on peut préférer préassembler le film (filtre) sélectif avec la bande avant.

Dans le cas b), de préférence, la bande avant est à base (en) poly(vinyl butyral) (PVB) contenant moins de 15% en poids de plastifiants, de préférence moins de 10% en poids et encore mieux moins de 5% en poids et en particulier sans plastifiant notamment d'épaisseur d'au plus 0,5mm, de préférence au plus 0,3mm et mieux d'au plus 0,15mm en particulier de 25 à 100μm, 40 à 70μm et même d'au plus 50μm Et l'intercalaire de feuilletage est à base en poly(vinyl butyral) (PVB) - avec plastifiant, notamment avec plus de 15% en poids de plastifiants classique- et notamment d'épaisseur E3 d'au moins 0,3mm et mieux d'au moins 0,5mm.

En particulier on peut choisir comme bande avant et/ou arrière PVB sans plastifiant le produit « MOWITAL LP BF » de la société KURARAY avec l'épaisseur que l'on souhaite.

La bande avant est de forme adaptée pour couvrir la face du film polymère (du filtre sélectif).

Un ruban adhésif double face utilisé nécessite le retrait d'un film de protection ('liner'). Par ailleurs la surface est collante avant le positionnement et donc ne permet pas de réajuster aisément le film si nécessaire. En outre des résidus de liner peuvent amener à un bullage ou du flou.

La bande avant dans la zone de bordure sous la face F3 peut aussi dépasser du ou des films surjacents (l'un au moins de ceux-là: film filtre sélectif, film AR, film de sécurité, film chauffant etc) notamment d'au plus 5cm ou 1cm pour mieux entrer en contact avec le PVB (lors du feuilletage).

Sous la face F3, la bande avant notamment à base de poly(vinyl butyral) (PVB) peut être en contact adhésif (latéral) avec l'intercalaire de feuilletage pour former une continuité de matière (pas d'espace entre l'intercalaire et la bande avant).

Ladite bande avant peut notamment dépasser du filtre sélectif (de préférence d'au plus 5cm, 1cm) pour assurer au mieux le contact adhésif avec l'intercalaire de feuilletage. La bande avant même si en PVB peut être un PVB distinct du PVB de l'intercalaire et/ou à tout le moins d'épaisseur différente de E3 par exemple plus mince. L'interface bande avant (PVB) /intercalaire (PVB) peut être discernable.

La face F2 peut comporter un empilement ayant l'un au moins des films polymères fonctionnels (d'épaisseur submillimétrique et même d'au plus $200\mu m$ ou $100\mu m$) notamment polyester, PET, transparents à la longueur d'onde de travail suivants : ledit filtre sélectif (revêtement ou en masse) , film de sécurité, film chauffant, film antireflet ou AR éventuellement plusieurs desdits films étant collés par un adhésif PSA,, film(s) lié(s) à la face F2 (bande avant ou PSA par exemple).

Naturellement un film peut combiner deux fonctions ou plus par ses surfaces (revêtement colorant sélectif, revêtement chauffant, antireflet à la longueur d'onde de travail par texturation ou revêtement, etc) et/ou en masse (filtre sélectif en masse, chauffant par fils en masse).

Aussi, au moins un film polymère fonctionnel (de l'élément de sécurité selon a) ou b) comporte au moins deux fonctions, de préférence une fonction par au moins un revêtement fonctionnel sur ledit film, fonctions notamment choisies parmi les suivantes : filtre sélectif, chauffante, antireflet, anticasse. Par exemple :

- film avec un revêtement filtre sélectif et un revêtement antireflet (même face ou faces opposées)
- film filtre sélectif (coloré en masse) avec un revêtement antireflet et/ou avec un revêtement chauffant (face opposées)
- film anti-casse ou de sécurité avec un revêtement filtre sélectif et même avec un revêtement antireflet (même face ou faces opposées).

Un exemple de film anti-casse est le film SolarGard dénommé Armorcoat 7Mil.

Dans l'ensemble de la description AR veut dire antireflet au moins à la longueur d'onde de travail.

La bande plastique avant est donc déjà liée (pleine surface ou ponctuellement) avec le film du filtre et/ou avec le feuillet d'assemblage (PVB). Dans ce dernier cas, la bande avant est dépassante (plus grande que le dispositif), le lien entre la bande avant et le feuillet peut servir seule de maintien du film du filtre et on n'a pas besoin de liaison supplémentaire face arrière et bande plastique.

La bande plastique avant est apte à coller avec la face F2 du vitrage par le feuilletage. A l'inverse du ruban adhésif double face, la face libre de la bande thermoplastique est non collante et prête à l'emploi. La bande plastique avant selon l'invention permet un positionnement précis sans perte de temps en ligne.

On peut prévoir donc les configurations suivantes d'empilement (formant un élément préassemblé de préférence) directement sur la face F2:

- bande avant /film teinté en masse/adhésif (PSA etc) ou autre bande avant/(/film AR)
- bande avant /film teinté en masse/ (revêtement AR)
- bande avant /film avec revêtement colorant sur l'une au moins des faces principales/film AR

Ou sur la couche colorante :

- bande avant /film AR

Un film teinté en masse peut être ledit filtre sélectif par exemple le produit Smoke-plus films chez SolarGard.

Dans le cas c), l'intercalaire est en PVB (incolore, acoustique etc). Le PVB est transparent à la longueur d'onde de travail.

Si l'intercalaire est multifeuillet, il peut s'agir d'un feuillet dit avant (côté Face F2) de préférence d'épaisseur d'au plus 0,4mm.

Le deuxième feuillet par exemple plus épais peut avoir un trou borgne éventuel d'accueil du film.

Le PVB est de préférence troué s'il absorbe la longueur d'onde de travail par exemple tel que PVB dopé par ITO.

Notamment on peut former un élément préassemblé avant feuilletage suivant : feuillet avant PVB /film (filtre sélectif) et avec un feuillet PVB troué lié au feuillet avant.

Et/ou de préférence (alternativement ou cumulativement à a), b) ou c) si cela est compatible) le film polymère ou un autre film polymère au-dessus dudit film et lié audit film est lié suivant l'une au moins des configurations suivantes à la face F3:

- m) via une couche d'adhésion comme le cas a)
- n) via une bande locale polymère dite bande arrière notamment à base de poly(vinyl butyral) (PVB) qui est en contact adhésif avec la face F3 dans la zone de bordure dudit trou traversant, de préférence en contact adhésif avec l'intercalaire de feuilletage, notamment bande locale dépassant du film (d'au plus 10 cm), la bande arrière étant absente sous ledit trou traversant ou dépassant d'au plus 5mm, la bande arrière est de préférence en contact (adhésif) avec l'intercalaire de feuilletage.
- o) via l'intercalaire de feuilletage, de préférence étant à base de PVB (le cas o) étant cumulable avec a) ou b)), de préférence troué au droit du dit trou traversant Pour n), cette bande arrière peut être sur tout le pourtour de la zone (vitré) de bordure du trou traversant.

Elle forme une surface fermée (même contour que le trou ou forme englobant le trou traversant). Par exemple cette bande arrière est de largeur 15mm (par exemple), par exemple un cadre rectangulaire, trapézoïdale etc.

Ladite bande arrière peut dépasser du filtre sélectif (de préférence d'au plus 5cm, 1cm) pour assurer au mieux le contact adhésif avec l'intercalaire de feuilletage.

La bande arrière peut être absente sous ledit trou traversant ou dépassant d'au plus 5mm, 3mm sous ledit trou traversant. Sous et en contact avec la face F3, elle peut aussi dépasser du ou des films sous-jacents (filtre sélectif, film AR etc) notamment d'au plus 5cm, 1cm pour mieux entrer en contact avec le PVB (lors du feuilletage) ou pour renforcer cette zone.

En face de F3, la bande arrière notamment à base de poly(vinyl butyral) (PVB) peut être en contact adhésif (latéral) avec l'intercalaire de feuilletage pour former une continuité de matière (pas d'espace entre l'intercalaire et la bande arrière).

La bande arrière même si en PVB peut être un PVB distinct du PVB de l'intercalaire et/ou à tout le moins d'épaisseur différente de E3 par exemple plus mince. L'interface bande arrière (PVB) /intercalaire (PVB) peut être discernable.

De préférence, la bande arrière (en) poly(vinyl butyral) (PVB) contenant moins de 15% en poids de plastifiants, de préférence moins de 10% en poids et encore mieux moins de 5% en poids et en particulier sans plastifiant notamment d'épaisseur d'au plus 0,5mm, de préférence au plus 0,3mm et mieux d'au plus 0,15mm en particulier de 25 à 100$\mu$m, 40 à 70$\mu$m et même d'au plus 50$\mu$m Et l'intercalaire de feuilletage est à base en poly(vinyl butyral) (PVB) - avec plastifiant, notamment avec plus de 15% en poids de plastifiants classique- et notamment d'épaisseur d'au moins 0,3mm et mieux d'au moins 0,5mm.

La bande locale avant et/ou arrière peut être à base (en) poly(vinyl butyral) (PVB) contenant moins de 15% en poids de plastifiants, et en particulier sans plastifiant, et notamment l'intercalaire de feuilletage est à base en poly(vinyl butyral) (PVB) avec plastifiant, notamment avec plus de 15% en poids de plastifiants.

Par exemple on a (avec film (filtre) sélectif ou revêtement sélectif (filtre sélectif) déposé sur F2):

- couche d'adhésion telle que PSA/film polymère ou empilement de films polymère collés entre eux / couche d'adhésion telle que PSA ou bande arrière

    --bande avant/film polymère ou empilement de films polymère collés entre eux / couche d'adhésion telle que PSA ou bande arrière

- couche d'adhésion telle que PSA/film polymère ou empilement de films polymère collés entre eux / intercalaire
- bande avant/film polymère ou empilement de films polymère collés entre eux / intercalaire
- bande avant ou couche d'adhésion telle que PSA/film polymère ou empilement de films polymère collés entre eux / intercalaire/ film polymère ou empilement de films polymère collés entre eux / couche d'adhésion telle que PSA ou bande arrière
- intercalaire/ film polymère ou empilement de films polymère collés entre eux / couche d'adhésion telle que PSA
- intercalaire/ film polymère ou empilement de films polymère collés entre eux / bande arrière.

L'intercalaire de feuilletage peut être troué au droit dudit trou traversant et même un peu au-delà (notamment d'au plus 50mm) s'étendant au deçà de la zone de bordure du trou.

Le vitrage peut comporter au moins sous ledit trou traversant une multicouches qui comporte une première couche PVB en contact adhésif avec la face F2 formant la bande avant/ au moins un film polymère notamment formant ou faisant partie dudit filtre sélectif ou un empilement de films polymère / une deuxième couche PVB trouée au droit dudit trou traversant formant ladite bande arrière.

La bande avant est en contact avec l'intercalaire de feuilletage, la bande arrière est en contact avec l'intercalaire de feuilletage.

Le tricouche peut aussi ne pas intégrer le filtre (cas d'une peinture en F2 par exemple).

Dans une réalisation, le filtre sélectif comporte un film polymérique, notamment PET, de préférence d'épaisseur d'au plus 0,3mm,0,15mm, comportant:

- un film polymérique colorant, notamment PET, d'épaisseur d'au plus 0,3mm/0,15mm, comportant un agent colorant dans la masse
- et/ou film (incolore ou teinté) revêtu d'une couche colorante en un composé comportant une matrice (organique, polymérique, hybride organique minérale : voie sol gel) et un agent colorant dispersé dans ladite matrice ledit agent colorant absorbant (sensiblement la totalité de) la lumière située dans ledit domaine du visible et étant (sensiblement) transparent à ladite longueur de travail sur une face principale

Dans une réalisation, le filtre sélectif comporte une couche en un composé comportant une matrice (organique, polymérique, minérale ou hybride) et un agent colorant dispersé dans ladite matrice, ledit agent colorant absorbant (sensiblement la totalité de) la lumière située dans ledit domaine du visible et étant (sensiblement) transparent à ladite longueur de travail, couche formant dans la zone dudit trou un revêtement :

- sur la face F2
- ou l'intercalaire de feuilletage côté face FA ou FB, de préférence en PVB, en particulier encre comportant en outre des particules PVB
- ou sur un film polymérique additionnel notamment PET sur une face principale côté F2 ou F3, d'épaisseur d'au plus 0,3mm,015mm de préférence liée à la face F2.

La couche colorante peut être d'épaisseur submillimétrique et même d'au plus 20$\mu$m.

Le composé de la couche colorante peut être polymérique, ou hybride organique minérale.

Le composé/la matrice polymérique de la couche colorante est choisi parmi des monomères, des oligomères, ou des polymères comprenant au moins une fonction méthacrylate, des époxydes, des vernis constitués de particules dispersées de PVB, latex, polyuréthane ou acrylate.

Le filtre sélectif peut contenir tout pigment ou colorant possédant une transmittance dans l'infrarouge plus élevée que sa transmittance dans le visible comme une encre noire proche infrarouge qui absorbe substantiellement les longueurs d'ondes dans le visibles en transmettant celles dans le proche infrarouge. Par exemple, le filtre sélectif (en couche) peut contenir des colorants ou encres comme les encres SpectreTM, par exemple SpectreTM 100, 110, 120, 130, 140, 150, ou 160 (Epolin, Newark, NJ); les encres Mimaki, par exemple Mimaki ES3, SS21, BS3, SS2, ou HS (Mimaki Global, Tomi-city, Nagano, Japan); ou les encres Seiko, par exemple Seiko 1000, 1300, SG700, SG740, ou VIC (Seiko Advance Ltd., Japan) ou encore encre noire IR9508 de MingBo anti Forgery Technology Co ltd

Le filtre sélectif (en couche) peut contenir un ou plusieurs composants de colorant noir, cyan, magenta ou jaune

Le filtre sélectif (en couche) peut un revêtement incluant des colorants ou pigments ou les deux. La couche sélective peut inclure Lumogen® Black FK 4280 ou Lumogen Black FK 4281 (BASF, Southfield, MI).

Dans certains exemples, le filtre sélectif (en couche) peut inclure un film multicouche, avec une ou plusieurs couches du film multicouche incluant des colorants, des pigments ou les deux.

De préférence

- l'agent colorant est choisi parmi le Sudan Black B®ou la Nigrosine Solvent black 5, et de préférence est le Sudan Black B®
- l'agent colorant représente entre 0,1 et 10% poids de la couche, de préférence entre 0,2 et 3% poids de la couche.

Le filtre sélectif (en couche) peut être un vernis moins de 30$\mu$m.

Pour le filtre sélectif en couche, on peut jouer sur l'épaisseur de couche ou sur le pourcentage massique d'agent colorant, en particulier au moins de 1%, 5% à 20%, 30%.

Le filtre sélectif peut comprendre un film polymère tel que de PET chargé dans sa masse en colorants par procédé de 'deep-dyeing' (teinture) en « roll-to-roll » ou rouleau à rouleau, notamment immersion dans un bain chaud avec les colorants. La concentration finale en colorant doit être suffisante pour apporter l'opacité dans le visible. On peut se référer au brevet WO9307329 ou US5162046.

On peut sur un film polymère tel que PET mettre une couche sélective par face principale.

On peut combiner un film polymère tel que PET teinté en masse et une couche sélective sur ce film, un autre film polymère tel que PET, sur le PVB restant en face dudit trou ou sur la face F2.

L'intercalaire de feuilletage est une multicouches qui comporte une première couche PVB en contact adhésif avec la face F2/ un film polymère formant ou faisant partie dudit filtre sélectif/ une deuxième couche PVB trouée au droit dudit trou traversant, le film polymère éventuellement étant porteur d'une couche de contrôle solaire en dehors dudit trou traversant

L'intercalaire de feuilletage comporte un PVB, dans la zone dudit trou traversant, faisant partie de l'un des empilements suivants (notamment préassemblé) :

- p) filtre sélectif/PVB(/élément antireflet comportant notamment un film polymère type PET)
- q) PVB/filtre sélectif tel que film polymère avec couche colorante en F'A ou F'B et/ou teinté en masse (/revêtement antireflet)
- r) PVB/filtre sélectif tel que film polymère avec couche colorante en F'A ou F'B et/ou teinté en masse /colle (/film antireflet)
- s) PVB/couche colorante(/revêtement antireflet).

Et dans la zone de bordure dudit trou traversant on peut rajouter une bande arrière pour p), q), r).

Par ailleurs, le vitrage selon l'invention peut comporter une platine (opaque) collée en face F4 comportant un trou au droit dudit trou traversant (plus large ou dans le prolongement dudit trou traversant), notamment platine plastique éventuellement renforcée, opaque, avec des moyens aptes à supporter ou maintenir un système de vision infrarouge à ladite longueur d'onde de travail tel qu'un LIDAR.

En particulier, sur la face F4 peut être collée une platine notamment d'épaisseur subcentimétrique en particulier 1 à 3mm, et même 1,5 à 2,5mm. Elle est par exemple en plastique éventuellement renforcé (fibres etc) par exemple polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyrène (PS), acrylonitrile styrène acrylate ASA, à base de polymère de formaldéhyde (polyoxymethylene POM), de terphényle polybromé (PBT), de préférence chargé en fibres de verre pour encore plus de résistance, notamment le PA66 GF30 (30% de fibres de verre)

Cette platine peut servir pour porter ou contribuer à maintenir ou stabiliser le LIDAR et/ou un boitier masquant le LIDAR. Cette platine peut être trouée au droit dudit trou traversant.

Comme ledit trou traversant, cette platine est de préférence périphérique notamment en bordure supérieure du vitrage. Par exemple elle est en zone centrale, zone (classique) du rétroviseur (présent ou absent).

Elle peut aussi porter ou contribuer à maintenir ou stabiliser un autre ou des autres éléments fonctionnels comme des capteurs par exemple capteur d'une caméra dans le visible et/ d'une caméra thermique (au-delà de $2,5\mu m$, allant au moins de 9,5 à $10,5\mu m$ et de préférence de 8 à $12\mu m$) ou tout autre capteur (pluie, de luminosité extérieure etc). Elle comporte autant de trous que nécessaire (et de taille adaptée) pour le ou les capteurs. Elle peut même porter ou contribuer à maintenir ou stabiliser la caméra thermique ou la caméra visible et/ou un boitier individuel ou commun au LIDAR, à la caméra thermique et/ou à la caméra dans le visible.

Si le trou est une encoche une partie de cette encoche sera masquée par le cadre du vitrage, donc non fonctionnelle pour le système de vision. Si le trou est fermé est trop près du bord il est en de même.

Si le trou est fermé, le bord du trou le plus proche de la tranche du vitrage (bord longitudinal supérieure de préférence et notamment dans une zone centrale) est distant de cette tranche du vitrage (de la deuxième feuille) d'au moins 2cm ou 3cm et mieux 5cm.

Le trou traversant peut être dans la zone centrale du bord longitudinale supérieur du pare-brise, zone usuelle du rétroviseur intérieur (adjacent au trou ou rétroviseur supprimé suivant les véhicules) zone où la couche de masquage en face F2 et/ou FA est généralement plus épaisse que sur les zones latérales longeant le bord supérieur (passager, conducteur...).

De préférence, le trou traversant présente une section, notamment trapézoïdale ou de type circulaire ou ovale,

- de plus petite dimension d'au moins 2, 3, 5, 8cm (adapté à la taille du système de vision infrarouge par exemple) - et de préférence de plus grande dimension (en particulier grand côté ou diamètre) d'au plus 40cm, 30cm, 20cm (pour des aspects mécaniques)
- et de préférence un revêtement antireflet occupe une surface englobant le trou et de longueur d'au plus 30cm.

En particulier la section du trou traversant est un quadrilatère, notamment rectangle ou un trapèze, avec

- un premier (grand) côté ou bord longitudinal dit supérieur (le plus proche de la tranche du bord longitudinal supérieur du vitrage) de préférence parallèle à la tranche du bord longitudinal supérieur du vitrage et de longueur de préférence d'au plus 30cm, 20cm ou 15cm ou 12cm et notamment espacé d'au moins 5cm ou 6cm de la tranche
- un deuxième (grand) côté ou bord longitudinal dit inférieur (le plus éloigné de la tranche du bord longitudinal supérieur du vitrage, plus proche de la zone centrale) de préférence parallèle à la tranche du bord longitudinal supérieur du vitrage et de longueur de préférence d'au plus 35cm ou 30cm ou 25cm ou 20cm et de préférence plus grande que celle du premier grand côté
- de hauteur (entre ces grands côtés) de préférence d'au moins 5cm et même d'au plus 15cm.

Si le trou est petit d'au plus 10, 8, 5, 2cm on préfère faire un trou circulaire.

Le trou traversant est le long d'un bord longitudinal ou alternativement le trou traversant est le long d'un bord latéral.

Dans le cas d'une lunette arrière le trou traversant peut être périphérique le long d'un bord longitudinal (notamment supérieur) ou latéral.

Naturellement le trou traversant est un espace vide ou au moins qui n'est pas rempli (dans sa partie centrale) par une matière quelconque absorbante dans le proche infrarouge visé qui serait entre un revêtement antireflet et le système de vision infrarouge.

Toutefois on peut prévoir un insert (fermé, ouvert) de type bague (monolithique ou en plusieurs morceaux disjoints ou reliés etc) notamment de largeur d'au plus 1,5cm par exemple en matière souple, polymère (polycarbonate, polyamide, polyoléfine, polypropylène etc) :

- monté sur (notamment collé ou en force) la paroi de la deuxième feuille de verre ou plastique délimitant (en partie haute) le trou
- voire également en contact avec la paroi de l'intercalaire de feuilletage et même sur la face F2.

Cet insert peut s'étendre au-delà du trou, notamment sur la face F4.

Cet insert peur servir :

- pour placer dans le trou tout ou partie du système de vision infrarouge ou une optique intermédiaire entre le revêtement antireflet et le système de vision infrarouge
- pour placer dans le trou tout ou partie de moyens de fixation du système de vision infrarouge.

Si le trou de l'intercalaire est fait avant feuilletage et l'insert est placé avant le feuilletage au niveau de l'intercalaire (notamment au plus 150°C et sous pression notamment), cet insert pour servir pour éviter ou réduire le fluage de l'intercalaire sur la surface libre du revêtement antireflet.

Dans une réalisation, l'invention comporte sur une surface libre d'un élément sous ou dans ledit trou traversant, un revêtement antireflet à au moins ladite longueur d'onde dite de travail dans l'infrarouge, avec une surface libre, l'élément étant choisi parmi l'un au moins des éléments suivants:

- un film polymérique, formant tout ou partie du filtre sélectif ou lié et couvrant le filtre sélectif, notamment un film PET, d'épaisseur d'au plus $0,3\mu m/015m$
- l'intercalaire de feuilletage (au plus partiellement troué côté face FB logeant un filtre sélectif en film) nu ou revêtu (de la couche active du filtre sélectif en face Fa)
- couche colorante dudit filtre sélectif.

Le trou traversant est de préférence dans une zone périphérique du vitrage feuilleté de préférence en bord longitudinal supérieur et/ou dans une région centrale périphérique et le revêtement antireflet est local et dans cette région périphérique.

Le trou traversant présente une forme donnée notamment de section droite convexe, par exemple trapézoïdale ou rectangulaire ou ronde ou ovale. Le revêtement antireflet peut présenter une forme homothétique

Un revêtement AR peut être directement sur un film polymère ou sur une sous- couche fonctionnelle (dont la couche colorante sélective ou encore une couche de type « *hard coat* »).

Un revêtement sélectif peut être directement sur un film polymère ou sur une sous-couche fonctionnelle

La première feuille de verre peut comporter, sur une face libre d'un élément sous ou dans ledit trou traversant de la deuxième feuille, un revêtement antireflet à au moins une longueur d'onde dite de travail dans l'infrarouge dans une gamme allant de 800nm à 1800nm, élément choisi parmi :

- un film polymérique, formant ou tout partie du filtre sélectif ou lié au filtre sélectif ou à

- un film polymérique de protection mécanique nu ou revêtu (de la couche active du filtre sélectif côté face F3 etc)
- l'intercalaire de feuilletage (au plus partiellement troué côté face FB logeant un filtre sélectif en film) nu ou revêtu (de la couche active du filtre sélectif en face Fa)

Le revêtement antireflet peut comprendre un empilement de couches minces diélectriques (d'oxyde et/ou de nitrures de métal ou de silicium par exemple) alternant haut et bas indices de réfraction (à la longueur d'onde de travail).

Le revêtement antireflet comporte de préférence une couche (fonctionnelle) de silice poreuse de préférence sol gel.

Dans un premier mode de réalisation, les pores sont les interstices d'un empilement non compact des billes nanométriques, notamment de silice, cette couche étant décrite par exemple dans le document US20040258929.

Dans un deuxième mode de réalisation, la couche poreuse est obtenue par le dépôt d'un sol de silice condensé (oligomères de silice) et densifié par des vapeurs de type NH3, cette couche étant décrite par exemple dans le document WO2005049757.

Dans un troisième mode de réalisation, la couche poreuse peut aussi être de type sol gel telle que comme décrite dans le document EP1329433. La couche poreuse peut aussi être obtenue avec d'autres agents porogènes connus : des micelles de molécules tensioactives cationiques en solution et, éventuellement, sous forme hydrolysée, ou de tensioactifs anioniques, non ioniques, ou des molécules amphiphiles, par exemple des copolymères blocs.

Dans un quatrième mode de réalisation, la couche poreuse peut aussi être de type sol gel telle que comme décrite dans le document WO2008/059170. La couche poreuse peut ainsi être obtenue avec des agents porogènes qui sont de préférence des billes polymériques.

Le revêtement antireflet notamment de silice poreuse selon l'invention peut avoir une épaisseur avantageusement comprise entre 10 nm et 10 $\mu$m (ces valeurs limites étant incluses), en particulier 50 nm et 1 $\mu$m et encore plus préférentiellement entre 70 et 500nm.

La couche de silice poreuse peut présenter des pores fermés d'au moins 20nm, 50nm ou 80nm éventuellement la couche fonctionnelle peut comporter des pores avec une concentration augmentant en direction de la surface libre.

Les pores peuvent avoir une forme allongée, notamment en grain de riz. Encore plus préférentiellement, les pores peuvent avoir une forme sensiblement sphérique ou ovale. On préfère que la majorité des pores fermés, voire au moins 80% d'entre eux, aient une forme donnée sensiblement identique, notamment allongée, sensiblement sphérique ou ovale.

Le revêtement antireflet peut comporter une sous couche de protection chimique notamment d'épaisseur d'au plus 200nm par exemple, notamment une couche de silice dense, par sol gel surmonté d'une couche fonctionnelle sol gel de silice poreuse. La sous-couche peut être à base de silice ou de dérivés au moins partiellement oxydés du silicium choisi parmi le dioxyde de silicium, des oxydes de silicium sous stoechiométriques, l'oxycarbure, l'oxynitrure ou l'oxycarbonitrure de silicium.

La sous-couche s'avère utile quand la surface sous-jacente est en verre silico-sodo-calcique car elle joue le rôle de barrière aux alcalins.

Cette sous-couche comprend donc avantageusement Si, O, éventuellement du carbone et de l'azote. Mais elle peut comprendre aussi des matériaux minoritaires par rapport au silicium, par exemple des métaux comme Al, Zn ou Zr. La sous-couche peut être déposée par sol-gel ou par pyrolyse, notamment par pyrolyse en phase gazeuse (CVD). Cette dernière technique permet d'obtenir des couches en SiO$_x$C$_y$ ou en SiO$_2$ assez aisément, notamment par dépôt directement sur le ruban de verre *float* dans le cas de substrats verriers. Mais on peut aussi effectuer le dépôt par une technique sous vide, par exemple par pulvérisation cathodique à partir d'une cible de Si (éventuellement dopée) ou d'une cible en sous-oxyde de silicium (en atmosphère réactive oxydante et/ou nitrurante par exemple). Cette sous-couche a de préférence une épaisseur d'au moins 5 nm, notamment une épaisseur comprise entre 10nm et 200 nm, par exemple entre 80nm et 120 nm.

Le revêtement antireflet peut aussi comporter une surcouche si elle n'altère pas les propriétés antireflet.

On peut aussi mettre un revêtement antireflet également en face F1 en regard de celui côté face F2.

Le revêtement antireflet peut avoir la même forme que la section du trou par exemple trapézoïdale ou encore rectangulaire etc.

Bien que moins préféré à priori, le revêtement antireflet peut être uniquement dans une zone centrale en regard dudit trou traversant, il ne dépasse pas du trou traversant et même est espacé du bord du trou traversant de préférence d'au plus 1cm. Par exemple la surface libre dans le trou traversant présente une longueur et/ou un côté d'au moins 5cm, 10cm, 15cm et de préférence d'au plus 30cm.

Sans sortir du cadre de l'invention, l'intercalaire peut bien entendu comprendre plusieurs feuillets en matière thermoplastique de natures différentes, par exemple de duretés différentes pour assurer une fonction acoustique, comme par exemple décrit dans la publication US 6,132,882, notamment une ensemble de feuillets de PVB de duretés différentes. De même l'une des feuilles de verres peut être amincie par rapport aux épaisseurs classiquement utilisées.

L'intercalaire peut selon l'invention présenter une forme en coin, notamment en vue d'une application HUD (Head Up Display pour visualisation tête haute). Egalement l'un des feuillets de l'intercalaire peut être teinté dans la masse.

Comme intercalaire de feuilletage usuel, outre le PVB, on peut citer le polyuréthane PU utilisé souple, un thermoplastique sans plastifiant tel que le copolymère éthylène/acétate de vinyle (EVA), une résine ionomère. Ces plastiques ont par exemple une épaisseur entre 0,2 mm et 1,1mm, notamment 0,3 et 0,7mm. L'intercalaire de feuilletage peut comprendre un autre film plastique fonctionnel (transparent, clair ou teinté) par exemple un film en poly(éthylène téréphtalate) PET porteur d'une couche athermique, électroconductrice etc, par exemple on a PVB/ film fonctionnel/PVB entre les faces F2 et F3.

Le film plastique transparent peut être d'une épaisseur comprise entre 10 et 100 $\mu$m. Le film plastique transparent peut être plus largement en polyamide, polyester, polyolefine (PE : polyéthylène, PP : polypropylène), polystyrène, polyvinyle chloride (PVC), poly téréphtalate d'éthylène (PET), polyméthacrylate de méthyle (PMMA), polycarbonate (PC). On préfère un film clair notamment le PET.

Comme on peut utiliser par exemple un film clair de PET revêtu, par exemple XIR de la société Eastman, un film coextrudé en PET-PMMA, par exemple du type SRF 3M®, mais aussi de nombreux autres films (par exemple en PC, PE, PEN, PMMA, PVC), qui sont visuellement aussi transparents que possible et ne se modifient pas dans l'autoclave en ce qui concerne leur surface et leur consistance.

Afin de limiter l'échauffement dans l'habitacle ou de limiter l'usage d'air conditionné, l'une des première et deuxième feuilles au moins (de préférence le verre extérieur) est teintée, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), la ou chaque couche d'argent étant disposée entre des couches diélectriques.

On peut cumuler couche (à l'argent) en face F2 et/ou F3 et couche TCO en face F4. La couche TCO (d'un oxyde transparent électro-conducteur) est de préférence une couche d'oxyde d'étain dopé au fluor ($SnO_2$:F) ou une couche d'oxyde mixte d'étain et d'indium (ITO).

La couche réfléchissant ou absorbant le rayonnement solaire est de préférence absente en regard dudit trou traversant.

Le vitrage peut donc comporter sur la face F2 un revêtement fonctionnel qui est une couche fonctionnelle athermique, notamment électroconductrice, éventuellement chauffante, en particulier un empilement à l'argent, si nécessaire absente dudit trou traversant au moins dans la zone centrale et en bordure du trou traversant entre la face F2 et Fa.

L'intercalaire (ou tout autre film polymère) peut comporter des fils métalliques notamment chauffants (face FB, face FA etc) notamment ancrés sur la surface et présents ou si nécessaire absents en regard dudit trou traversant de la deuxième feuille de verre.

Les fils chauffants notamment ont une épaisseur inférieure ou égale à 0,1 mm de préférence de cuivre, de tungstène, d'or, d'argent ou aluminium ou d'alliages d'au moins deux de ces métaux.

Dans un mode de réalisation, une zone de chauffage du vitrage (éventuellement local, en regard dudit trou traversant de la deuxième feuille de verre) comporte une pluralité de fils métalliques individuels, appelés « fils métalliques chauffants » qui relient des « busbars » entre eux. Le courant de chauffage passe par ces fils métalliques individuels. Les fils sont avantageusement très minces de manière à ne pas, ou seulement très peu, détériorer la transparence du vitrage. De préférence, les fils métalliques ont une épaisseur inférieure ou égale à 0,1 mm, en particulier comprise entre 0,02 et 0,04 mm, et idéalement entre 0,024 mm et 0,029 mm. Les fils métalliques contiennent de préférence du cuivre, du tungstène, de l'or, de l'argent ou de l'aluminium ou un alliage d'au moins deux de ces métaux. L'alliage peut également contenir du molybdène, du rhénium, de l'osmium, de l'iridium, du palladium ou du platine. Les fils métalliques sont de préférence isolés électriquement.

Pour le verre de la première feuille de verre et/ou de la deuxième feuille de verre, il s'agit de préférence d'un verre du type silico-sodo-calcique.

La première feuille de verre notamment à base de silice, sodocalcique, silico-sodo-calcique (de préférence), ou aluminosilicate, ou borosilicate, présente une teneur pondérale en oxyde de fer total (exprimé sous la forme $Fe_2O_3$) d'au plus 0,05% (500ppm), de préférence d'au plus 0,03% (300ppm) et d'au plus 0,015% (150ppm) et notamment supérieure ou égale à 0,005%.

La deuxième feuille de verre notamment à base de silice, sodocalcique, de préférence silico-sodo-calcique (et comme la première feuille de verre), voire aluminosilicate, ou borosilicate présente une teneur pondérale en oxyde de fer total (exprimé sous la forme $Fe_2O_3$) d'au moins 0,4% et de préférence d'au plus 1,5%.

En outre, on peut prévoir notamment sur la face F2 un revêtement fonctionnel qui est une couche fonctionnelle athermique, notamment électroconductrice, éventuellement chauffante, en particulier un empilement à l'argent, absente dudit trou traversant au moins dans la zone centrale et présente en bordure du trou traversant entre la face F2 et FA, le filtre sélectif étant éventuellement en contact de la couche fonctionnelle notamment sur ou sous la couche fonctionnelle athermique.

Dans une configuration le premier vitrage est en verre minéral et le deuxième vitrage est en plastique par exemple plus mince (film) etc, par exemple en PC, PMMA, PET. Alternativement il s'agit d'une deuxième feuille de verre.

Selon l'invention pour simplifier et accélérer la fabrication du vitrage on recourt à un élément préassemblé par collage ou contact adhésif hors ligne de feuilletage.

La deuxième feuille de verre ou plastique est notamment verte, bleue, grise. La deuxième feuille de verre peut être verte par le fer, ou encore bleue avec CoO, ou grise avec Se et CoO.

On peut citer notamment les verres de la Demanderesse dénommés TSAnx (0,5 à 0,6% de fer), TSA2+, TSA3+ (0,8 à 0,9% de fer), TSA4+ (1% de fer), TSA5+, par exemple verts.

Le TSA3+ (2.1mm) a par exemple une transmission totale à 905mm d'environ 40% et à 1550mm d'environ 50%

La deuxième feuille de verre peut présenter un rédox étant défini comme étant le rapport entre la teneur pondérale en FeO (fer ferreux) et la teneur pondérale en oxyde de fer total (exprimé sous la forme $Fe_2O_3$) entre 0,22 et 0,35 ou 0,30.

Ladite deuxième feuille de verre peut avoir une composition chimique qui comprend les constituants suivants en une teneur variant dans les limites pondérales ci-après définies :

| | |
|---|---|
| $SiO_2$ | 64 - 75 % |
| $Al_2O_3$ | 0 - 5 % |
| $B_2O_3$ | 0 - 5 %, |
| CaO | 2 - 15 % |
| MgO | 0 - 5 % |
| $Na_2O$ | 9 - 18 % |
| $K_2O$ | 0 - 5 % |
| $SO_3$ | 0,1 - 0,35% |
| $Fe_2O_3$ (fer total) | au moins 0,4% et même 0,4 à 1,5%, |
| Eventuellement Rédox | 0,22 - 0,3 |

Et notamment moins de 0,1% d'impuretés.

Le verre intérieur et/ou extérieur peut avoir subi un traitement chimique ou thermique du type durcissement, recuit ou une trempe (pour une meilleure résistance mécanique notamment) ou être semi trempé.

Le verre de la première feuille de verre et/ou de la deuxième feuille de verre est de préférence du type flotté, c'est-à-dire susceptible d'avoir été obtenu par un procédé consistant à déverser le verre fondu sur un bain d'étain en fusion (bain « float »). On entend par faces « atmosphère » et « étain », les faces ayant été respectivement en contact avec l'atmosphère régnant dans le bain float et en contact avec l'étain fondu. La face étain contient une faible quantité superficielle d'étain ayant diffusé dans la structure du verre.

La face F2 peut aussi bien être la face « étain » la face « atmosphère ».

La première feuille de verre peut être par exemple un verre silico-sodo-calcique comme le verre Diamant[®] de Saint-Gobain Glass, ou Optiwhite[®] de Pilkington, ou B270[®] de Schott, ou Sunmax[®] d'AGC ou d'autre composition décrite dans le document WO04/025334. On peut aussi choisir le verre Planiclear[®] de la société Saint-Gobain Glass

Avec les matières premières naturelles ordinaires, la teneur pondérale totale en oxyde de fer est de l'ordre de 0,1% (1000 ppm). Pour abaisser la teneur en oxyde de fer, on peut choisir des matières premières particulièrement pures.

Dans la présente invention, la teneur en $Fe_2O_3$ (fer total) de la première feuille de verre est de préférence inférieure à 0,015%, voire inférieure ou égale à 0,012%, notamment 0,010%, afin d'augmenter la transmission proche infrarouge du verre. La teneur en $Fe_2O_3$ est de préférence supérieure ou égale à 0,005%, notamment 0,008% pour ne pas trop pénaliser le coût du verre.

Pour augmenter plus encore la transmission de la première feuille de verre dans l'infrarouge, on peut diminuer la teneur en fer ferreux au profit de la teneur en fer ferrique, donc d'oxyder le fer présent dans le verre. On vise ainsi des verres ayant un « rédox » le plus faible possible, idéalement nul ou quasi nul. Ce nombre peut varier entre 0 et 0,9, des rédox nuls correspondant à un verre totalement oxydé.

Les verres comprenant de faibles quantités d'oxyde de fer, notamment moins de 200 ppm, voire moins de 150 ppm, ont une tendance naturelle à présenter des rédox élevés, supérieurs à 0,4, voire même à 0,5. Cette tendance est probablement due à un déplacement de l'équilibre d'oxydoréduction du fer en fonction de la teneur en oxyde de fer.

Le rédox de la première feuille de verre est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les verres selon l'invention (première et même deuxième feuille), la silice $SiO_2$ est généralement maintenue

dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

Ladite première feuille de verre peut avoir une composition chimique qui comprend les constituants suivants en une teneur variant dans les limites pondérales ci-après définies :

| | |
|---|---|
| $SiO_2$ | 60 - 75 % |
| $Al_2O_3$ | 0 - 10 % |
| $B_2O_3$ | 0 - 5 %, de préférence 0 |
| CaO | 5 - 15 % |
| MgO | 0 - 10 % |
| $Na_2O$ | 5 - 20 % |
| $K_2O$ | 0 - 10 % |
| BaO | 0 - 5 %, de préférence 0, |
| $SO_3$ | 0,1 - 0,4 % |
| $Fe_2O_3$ (fer total) | 0 à 0,015%, |
| Rédox | 0,1 - 0,3. |

Dans l'ensemble du texte, les pourcentages sont des pourcentages pondéraux.

Les feuilles de verre sont de préférence formées par flottage sur un bain d'étain. D'autres types de procédé de formage peuvent être employés, tels que les procédés d'étirage, procédé « down-draw », procédé de laminage, procédé Fourcault...

La composition de verre de la première feuille de verre peut comprendre, outre les impuretés inévitables contenues notamment dans les matières premières, une faible proportion (jusqu'à 1 %) d'autres constituants, par exemple des agents aidant à la fusion ou l'affinage du verre (Cl...), ou encore des éléments provenant de la dissolution des réfractaires servant à la construction des fours (par exemple $ZrO_2$). Pour les raisons déjà évoquées, la composition selon l'invention ne comprend de préférence pas d'oxydes tels que $Sb_2O_3$, $As_2O_3$ ou $CeO_2$.

La composition de la première feuille de verre ne comprend de préférence aucun agent absorbant les infrarouges (notamment pour une longueur d'ondes comprise entre 800 et 1800nm). En particulier, la composition selon l'invention ne contient de préférence aucun des agents suivants : les oxydes d'éléments de transition tels que CoO, CuO, $Cr_2O_3$, NiO, $MnO_2$, $V_2O_5$, les oxydes de terres rares tels que $CeO_2$, $La_2O_3$, $Nd_2O_3$, $Er_2O_3$, ou encore les agents colorants à l'état élémentaire tels que Se, Ag, Cu. Parmi les autres agents de préférence exclus figurent également les oxydes des éléments suivants : Sc, Y, Pr, Sm, Eu, Gd, Tb, Dy, Ho, Tm, Yb, Lu. Ces agents ont bien souvent un effet colorant indésirable très puissant, se manifestant à de très faibles teneurs, parfois de l'ordre de quelques ppm ou moins (1 ppm = 0,0001%). Leur présence diminue ainsi très fortement la transmission du verre.

De préférence, la première feuille de verre présente une composition chimique qui comprend les constituants suivants en une teneur variant dans les limites pondérales ci-après définies :

| | |
|---|---|
| $SiO_2$ | 60 - 75 % |
| $Al_2O_3$ | 0 - 10 % |
| $B_2O_3$ | 0 - 5 %, de préférence 0 |
| CaO | 5 - 15 % |
| MgO | 0 - 10 % |
| $Na_2O$ | 5 - 20 % |
| $K_2O$ | 0 - 10 % |
| BaO | 0 - 5 %, de préférence 0, |
| $SO_3$ | > 0,2 - 0,4% |
| $Fe_2O_3$ (fer total) | 0 à 0,015%, |
| Rédox | 0,2 - 0,30. |

La première feuille de verre peut présenter une composition chimique qui comprend les constituants suivants en une teneur variant dans les limites pondérales ci-après définies :

| | |
|---|---|
| SiO$_2$ | 60 - 75 % |
| Al$_2$O$_3$ | 0 - 10 % |
| B$_2$O$_3$ | 0 - 5 %, de préférence 0 |
| CaO | 5 - 15 % |
| MgO | 0 - 10 % |
| Na$_2$O | 5 - 20 % |
| K$_2$O | 0 - 10 % |
| BaO | 0 - 5 %, de préférence 0, |
| SO$_3$ | 0,1 - 0,4% |
| Fe$_2$O$_3$ (fer total) | 0 à 0,02%, |
| Rédox | 0,15-0,3. |

Dans la présente invention, la teneur en Fe$_2$O$_3$ (fer total) est de préférence inférieure à 0,015%, voire inférieure ou égale à 0,012%, notamment 0,010%, ce afin d'augmenter la transmission proche infrarouge du verre. La teneur en Fe$_2$O$_3$ est de préférence supérieure ou égale à 0,005%, notamment 0,008% pour ne pas trop pénaliser le coût du verre.
Le rédox est de préférence supérieur ou égal à 0,15, et notamment compris entre 0,2 et 0,30, notamment entre 0,25 et 0,30. De trop faibles rédox contribuent en effet à la réduction de la durée de vie des fours.
Dans les verres selon l'invention, la silice SiO$_2$ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.
D'autres compositions préférées selon l'invention sont reproduites ci-après :

| | |
|---|---|
| SiO$_2$ | 65 - 75 % |
| Al$_2$O$_3$ | 0 - 3 % |
| CaO | 7 - 12 % |
| MgO | 2 - 5 % |
| Na$_2$O | 10 - 15 % |
| K$_2$O | 0 - 5 % |
| SO$_3$ | 0,1 - 0,3% |
| Fe$_2$O$_3$ (fer total) | 0 à moins de 0,015%, |
| Rédox | 0,1 - 0,3. |

D'autres compositions préférées selon l'invention sont reproduites ci-après :

| | |
|---|---|
| SiO$_2$ | 65 - 75 % |
| Al$_2$O$_3$ | 0 - 5 % |
| CaO | 7 - 12 % |
| MgO | 1 - 5 % |
| Na$_2$O | 10 - 15 % |
| K$_2$O | 0 - 5 % |
| SO$_3$ | 0,2 - 0,4% |
| Fe$_2$O$_3$ (fer total) | 0 à moins de 0,015%, |
| Rédox | 0,1 - 0,3. |

Naturellement l'application la plus recherchée est que le vitrage soit un pare-brise d'un véhicule routier (automobile) ou même ferroviaire (à vitesse modérée).
L'invention se rapporte également un véhicule notamment autonome ou semi autonome incorporant le vitrage de véhicule selon l'invention, notamment formant un pare-brise.
L'invention se rapporte également à un dispositif, notamment véhicule (routier), qui comprend :

- le vitrage tel que décrit précédemment
- un système de vision infrarouge à ladite longueur d'onde de travail, tel qu'un LIDAR, disposé dans l'habitacle derrière ledit vitrage de façon à envoyer et/ou recevoir un rayonnement après traversée de la première feuille de verre au niveau dudit trou traversant.

Concernant la fabrication, pour un dégazage, on peut placer dans une poche la structure à feuilleter dans une étuve.

Le feuilletage peut être un traitement thermique sous pression et/ou sous vide à une température d'au plus 200°C ou 130°C et même d'au moins 100°C 120°C. on peut utiliser un autoclave

De préférence

L'invention concerne un procédé de fabrication dudit vitrage feuilleté tel que décrit précédemment tel que :

avant feuilletage, en face dudit trou traversant et dans une zone de bordure dudit trou traversant, la face F2 comportant un élément (empilement etc) incluant ledit filtre sélectif comme un film polymère notamment polyester, PET ou un empilement de film(s) polymère collés notamment par une colle PSA, élément avec une épaisseur totale d'au plus 0,2mm et même d'au plus 0,15mm, l'intercalaire de feuilletage, notamment PVB, mono ou multifeuillet, comporte un trou traversant dit d'intercalaire en face dudit trou traversant de la deuxième feuille et dans la zone de bordure dudit trou traversant, la face FA étant sur ledit élément et notamment la face FB sur la face F3, après ledit feuilletage le trou d'intercalaire éventuellement dépasse d'au plus 5mm dudit trou traversant de la deuxième feuille (de verre).

L'invention concerne un procédé de fabrication dudit vitrage feuilleté tel que décrit précédemment tel que :

avant feuilletage, en face dudit trou traversant et dans une zone de bordure dudit trou traversant, la face F2 comportant un élément incluant ledit filtre sélectif comme un film polymère notamment polyester, PET ou un empilement de film(s) polymère collés notamment par une colle PSA, élément notamment avec une épaisseur totale d'au moins 0,2mm, l'intercalaire de feuilletage, notamment PVB, mono ou multifeuillet, comporte un trou traversant dit d'intercalaire en face dudit trou traversant de la deuxième feuille et dans une zone de bordure dudit trou traversant ledit élément est dans ledit trou d'intercalaire

et dans la zone de bordure dudit trou traversant, est présent entre l'élément et la face F3 ladite bande arrière

de préférence après ledit feuilletage

au niveau dudit trou d'intercalaire, l'élément est en contact adhésif avec l'intercalaire et/ou la bande arrière est en contact adhésif avec l'intercalaire et éventuellement dépasse d'au plus 5mm dans le trou traversant de la deuxième feuille (de verre)

L'invention concerne un procédé de fabrication dudit vitrage feuilleté tel que décrit précédemment tel que :

avant feuilletage, en face dudit trou traversant et dans une zone de bordure dudit trou traversant, la face F2 comportant un élément (empilement etc) incluant ledit filtre sélectif comme un film polymère notamment polyester, PET ou un empilement de film(s) polymère collés notamment par une colle PSA, élément notamment avec une épaisseur totale d'au moins 0,2mm, l'intercalaire de feuilletage, notamment PVB, comporte un premier feuillet ou un premier multifeuillets un premier trou traversant dit d'intercalaire en face dudit trou traversant de la deuxième feuille et dans une zone de bordure dudit trou traversant

ledit élément est dans ledit trou d'intercalaire

l'intercalaire de feuilletage comporte un deuxième feuillet présentant un deuxième trou d'intercalaire moins large que le premier trou et dans la zone de bordure dudit trou traversant entre l'élément et la face F3

de préférence après ledit feuilletage

au niveau dudit premier trou d'intercalaire, l'élément est en contact adhésif avec l'intercalaire

le deuxième trou d'intercalaire éventuellement dépasse d'au plus 5mm dans le trou traversant de la deuxième feuille (de verre).

En outre, avant la formation de la structure à feuilleter (première feuille, intercalaire, deuxième feuille en incluant un élément en film(s) polymère et avec le filtre sélectif) on préassemble ledit élément comportant ladite bande avant et/ou ladite bande arrière.

On peut préférer préassembler le film sélectif avec la couche d'adhésion (diélectrique, etc) qui est par exemple protégée par un film amovible (liner) à retirer avant positionnement entre les première et deuxième feuilles Pour simplifier et accélérer la fabrication du vitrage on peut préférer utiliser un élément préassemblé par collage ou contact adhésif hors ligne de feuilletage.

On préassemble par exemple le bicouche suivant : bande avant PVB/ film sélectif et même on peut placer et lier ce bicouche sur un feuillet PVB d'intercalaire (troué ou non sous ledit trou traversant) ou sur une bande arrière PVB, par exemple chauffe locale. Notamment on peut former un élément préassemblé avant feuilletage suivant : feuillet avant PVB /film (filtre sélectif) et avec un feuillet PVB troué lié au feuillet avant.

Certains modes de réalisations avantageux mais non limitatif de la présente invention sont décrits ci-après, qui peuvent bien entendu combinés entres eux le cas échéant.

La figure 1 schématise en vue de coupe partielle un pare-brise 100 dans un premier mode de réalisation de l'invention avec un système de vision infrarouge 7 tel qu'un LIDAR. La figure 1' est une vue de détail de la figure 1

La figure 1a une vue de face partielle du pare-brise (côté habitacle) de la figure 1.

La figure 1b schématise en vue de face (côté extérieur) le pare-brise 100 de la figure 1.

La figure 1c schématise en vue de face (côté extérieur) le pare-brise 100 de la figure 1 dans une variante.

La figure 1d schématise en vue de face (côté extérieur) le pare-brise 100 de la figure 1 dans une variante.

La figure 1e schématise en vue de face (côté extérieur) le pare-brise 100 de la figure 1 dans une variante.

La figure 2 schématise en vue de coupe partielle et de détail autour du trou traversant d'un pare-brise 200 dans un deuxième mode de réalisation de l'invention.

La figure 3 schématise en vue de coupe partielle et de détail autour du trou traversant d'un pare-brise 300 dans un troisième mode de réalisation de l'invention.

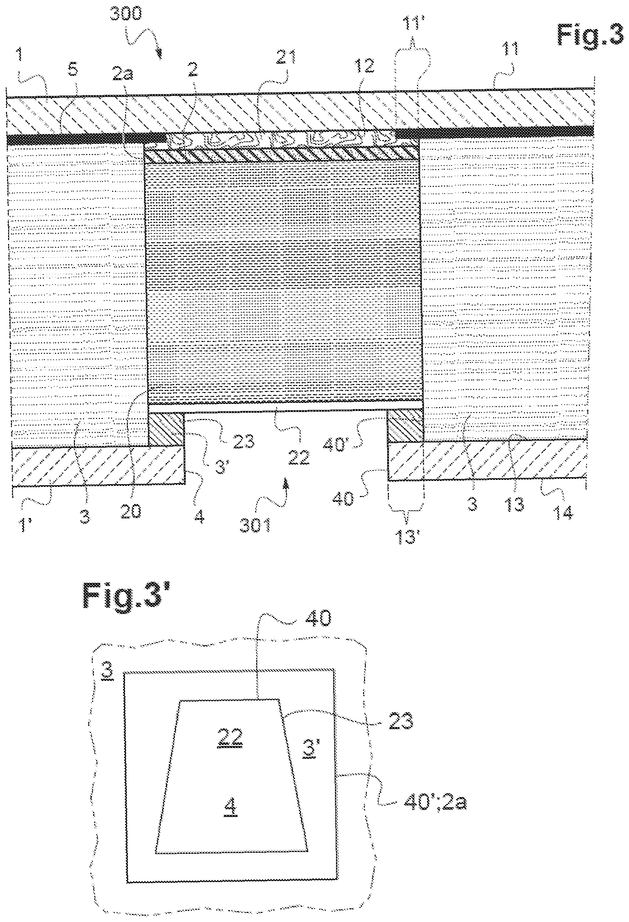

La figure 3' schématise en vue de face (côté habitacle) le pare-brise 300 de la figure 3.

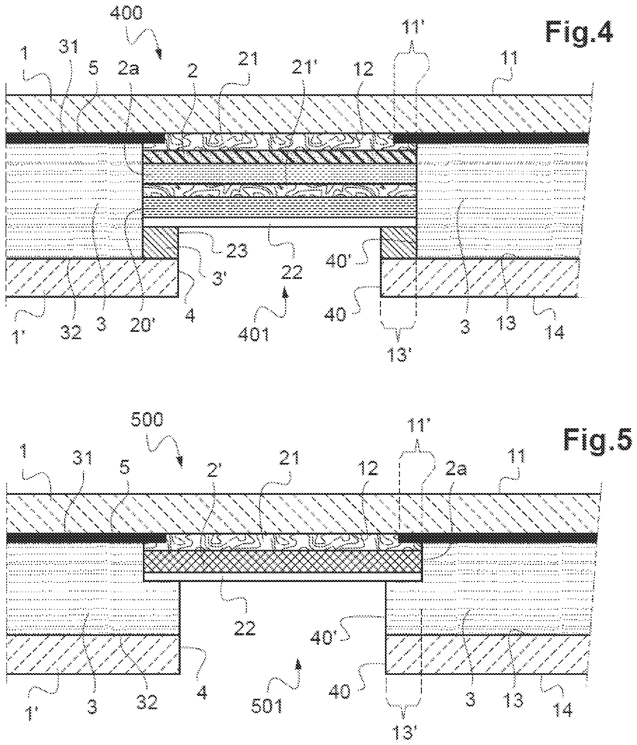

La figure 4 schématise en vue de coupe partielle et de détail autour du trou traversant d'un pare-brise 400 dans un quatrième mode de réalisation de l'invention.

La figure 5 schématise en vue de coupe partielle et de détail autour du trou traversant d'un pare-brise 500 dans un cinquième mode de réalisation de l'invention.

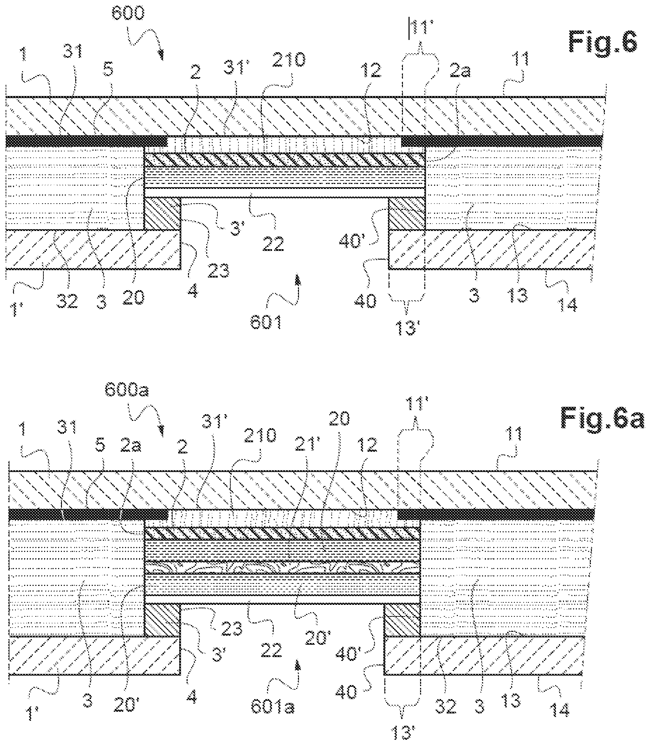

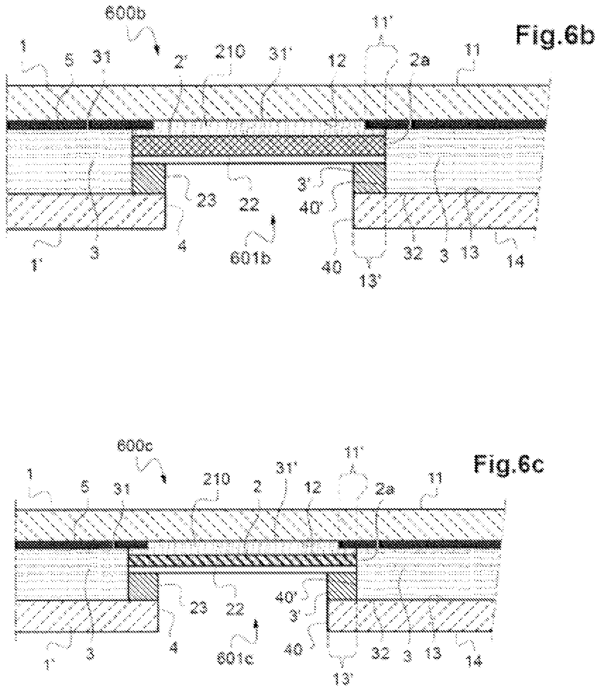

La figure 6 schématise en vue de coupe partielle et de détail autour du trou traversant d'un pare-brise 600 dans un sixième mode de réalisation de l'invention.

La figure 6a schématise en vue de coupe partielle et de détail autour du trou traversant d'un pare-brise 600a dans une première variante du sixième mode de réalisation de l'invention.

La figure 6b schématise en vue de coupe partielle et de détail autour du trou traversant d'un pare-brise 600b dans une deuxième variante du sixième mode de réalisation de l'invention.

La figure 6c schématise en vue de coupe partielle et de détail autour du trou traversant d'un pare-brise 600c dans une troisième variante du sixième mode de réalisation de l'invention.

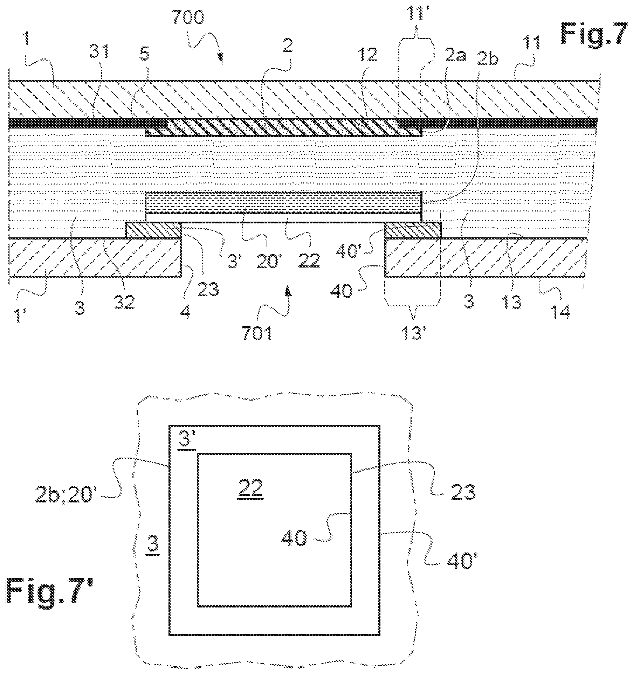

La figure 7 schématise en vue de coupe partielle et de détail autour du trou traversant d'un pare-brise 700 dans un septième mode de réalisation de l'invention.

La figure 7' une vue de face partielle du pare-brise (côté habitacle) de la figure 7.

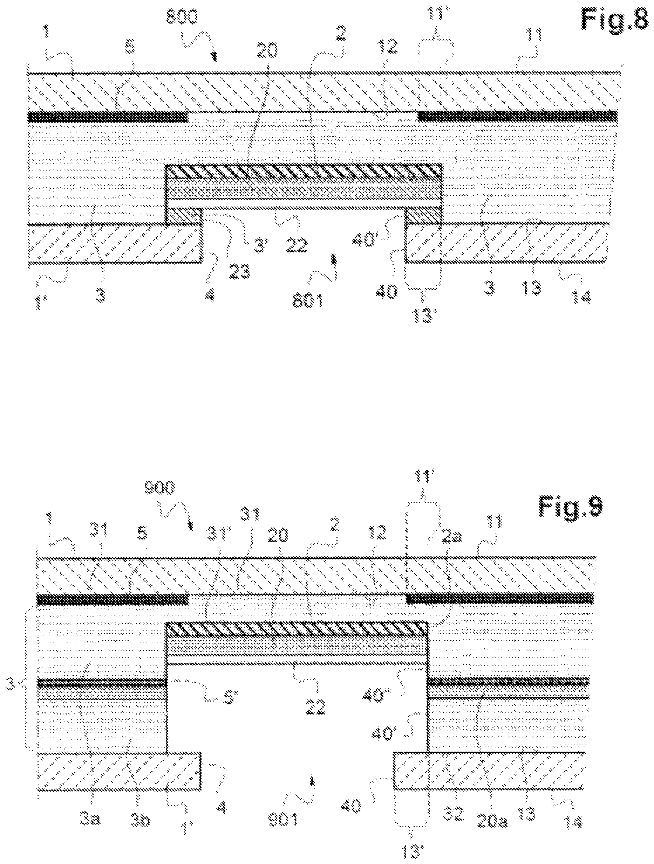

La figure 8 schématise en vue de coupe partielle et de détail autour du trou traversant d'un pare-brise 800 dans un huitième mode de réalisation de l'invention.

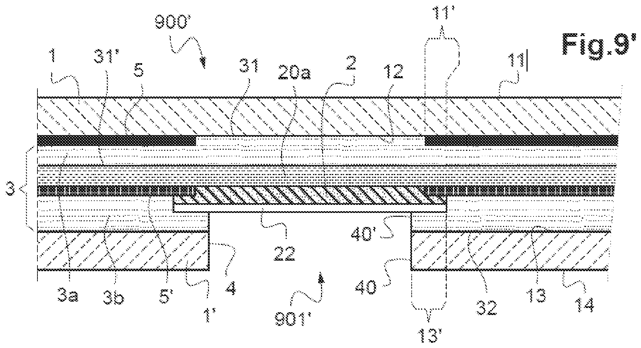

La figure 9 schématise en vue de coupe partielle et de détail autour du trou traversant d'un pare-brise 900 dans un neuvième mode de réalisation de l'invention.

La figure 9' schématise en vue de coupe partielle et de détail autour du trou traversant d'un pare-brise 900' dans une variante du neuvième mode de réalisation de l'invention.

Le figures ne sont pas à l'échelle.

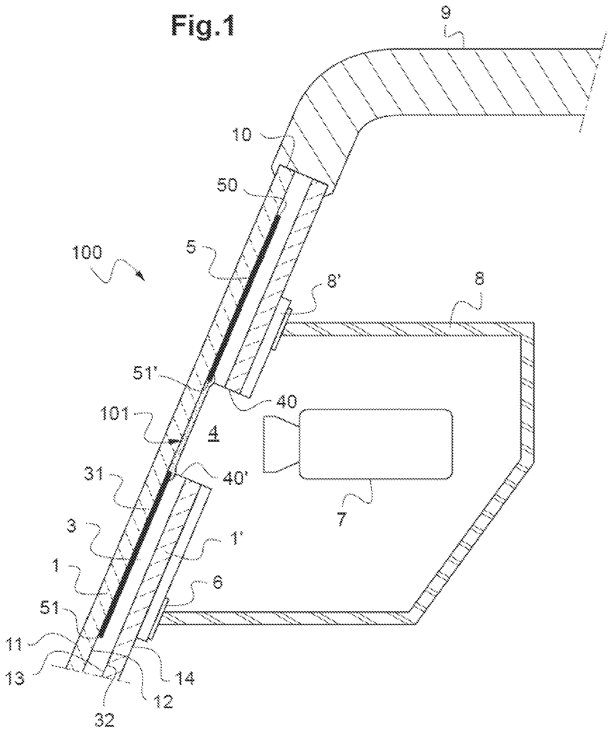

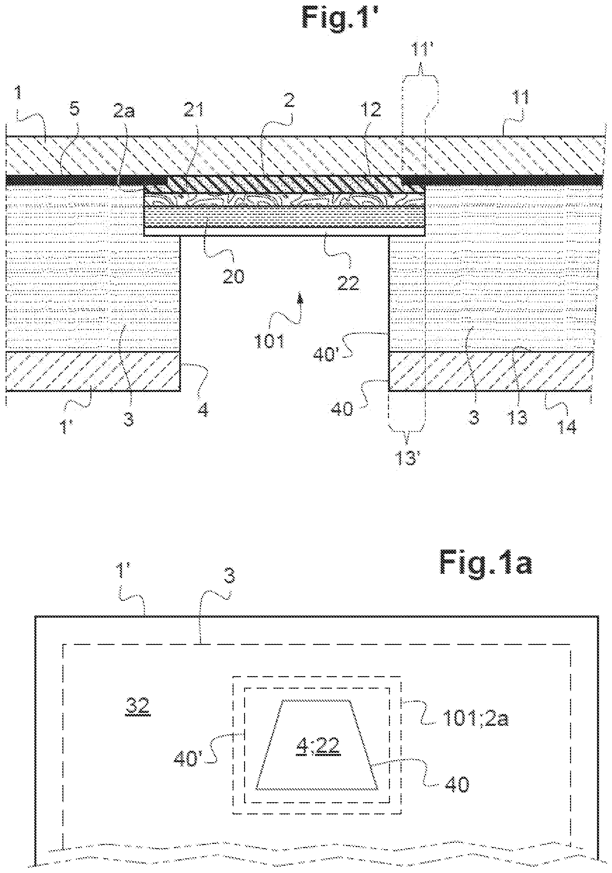

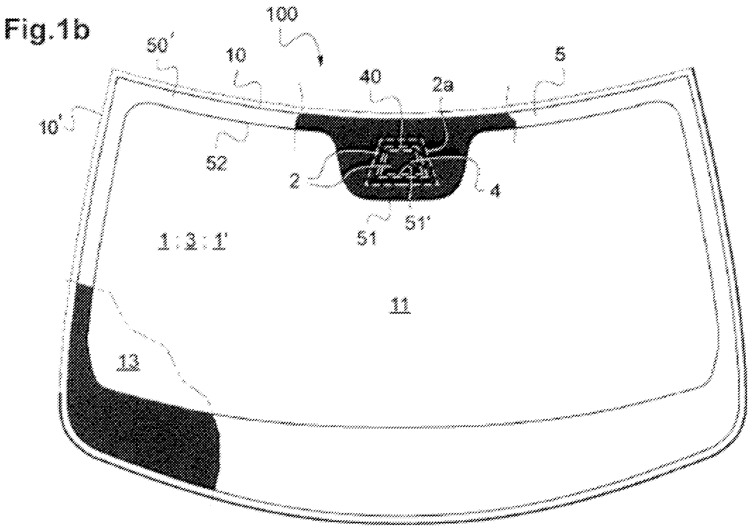

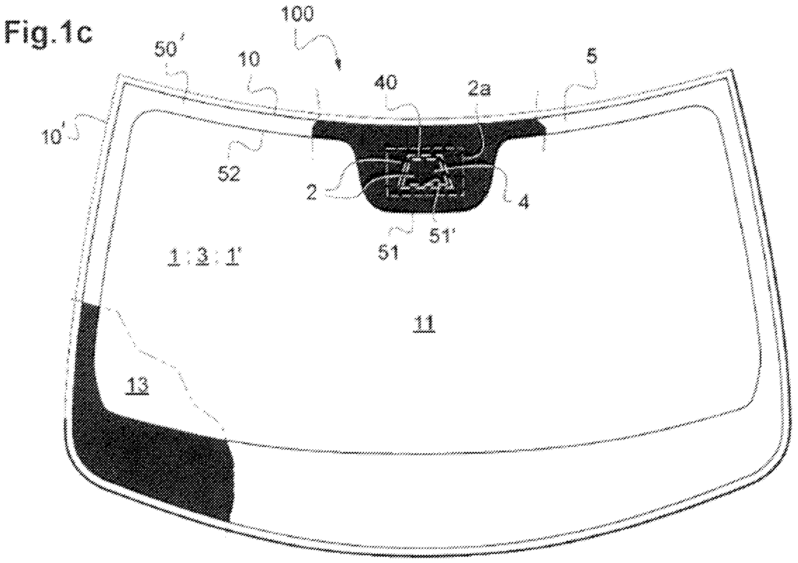

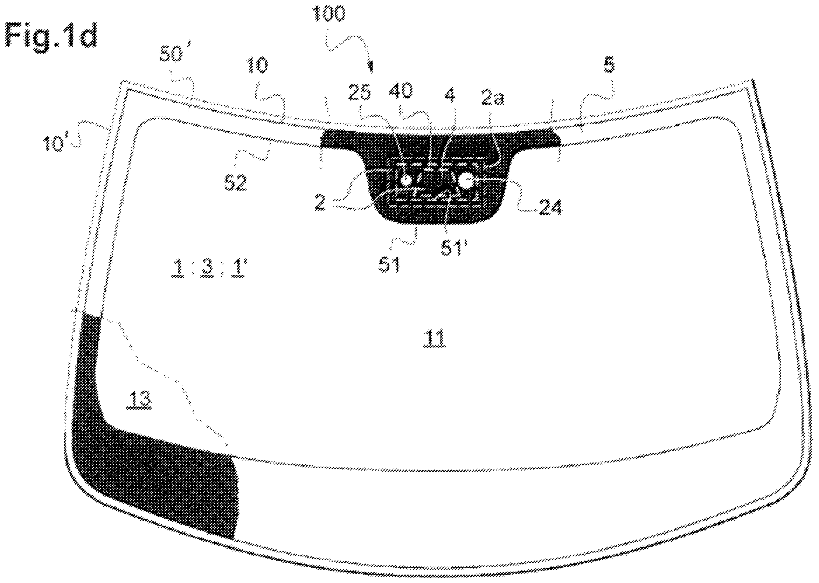

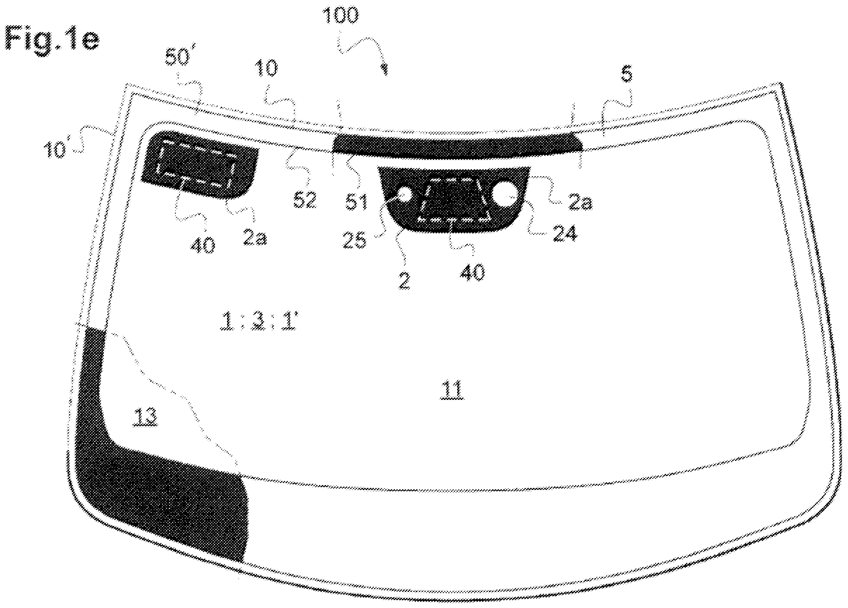

La figure 1 schématise un pare-brise 100 selon l'invention, en coupe avec un système de vision infrarouge 7 tel qu'un LIDAR à 850nm ou 905nm ou 1550nm. La figure 1' est une vue de détail de la figure 1 et la vue 1a une vue de face partielle du pare-brise de la figure 1. La figure 1' est une vue de détail de la figure 1. La figure 1a une vue de face partielle du pare-brise (côté habitacle) de la figure 1.

La figure 1b schématise en vue de face (côté extérieur) le pare-brise 100 de la figure 1.

Ce système de vision 7 est placé derrière le pare-brise face à une zone qui se situe de préférence dans la partie centrale et supérieure du pare-brise. Dans cette zone, le système de vision infrarouge 7 est orienté avec un certain angle vis-à-vis de la surface du pare-brise (face F2). En particulier, le LIDAR peut être orienté directement vers la zone de saisie d'images, selon une direction parallèle ou proche de la parallèle au sol, c'est-à-dire légèrement inclinée vers la route.

Le pare-brise est un vitrage feuilleté comprenant :

- une feuille de verre externe 1, avec face extérieure dite F1 11 et face intérieure F2 dite 12
- et une feuille de verre interne 1' (ou en variante plastique), par exemple d'épaisseur ou même de 1,6mm ou même moins, avec face extérieure dite F3 13 et face intérieure dite F4 14 côté habitacle
- les deux feuilles de verre étant liées l'une à l'autre par un intercalaire en matière thermoplastique 3, le plus souvent en polyvinylbutyral (PVB) de préférence clair, d'épaisseur submillimétrique éventuellement présentant une section transversale diminuant en forme en coin du haut vers le bas du vitrage feuilleté, par exemple un PVB (RC41 de Solutia ou d'Eastman) d'épaisseur 0,76mm environ et/ou en variante si nécessaire un PVB acoustique (tricouche ou quadricouche) par exemple d'épaisseur 0,81mm environ, par exemple intercalaire en trois feuillets PVB ou encore tricouche PVB/PET fonctionnel (contrôle solaire etc)/PVB.

De façon classique et bien connue, le pare-brise est obtenu par feuilletage à chaud des éléments 1, 1' et 3. On choisit par exemple un PVB clair de 0,76mm. Si on conserve le PVB en face du trou traversant on le préfère le plus transparent à la longueur d'onde de travail).

La première feuille de verre 1 notamment à base de silice, sodocalcique, silicosodo calcique (de préférence), aluminosilicate, borosilicate, présente une teneur pondérale en oxyde de fer total (exprimé sous la forme $Fe_2O_3$) d'au plus 0,05% (500ppm), de préférence d'au plus 0,03% (300ppm) et d'au plus 0,015% (150ppm) et notamment supérieure ou égale à 0,005%. La première feuille de verre peut présenter un rédox supérieur ou égal à 0,15, et notamment compris entre 0,2 et 0,30, notamment entre 0,25 et 0,30.

On choisit notamment un verre OPTWHITE et de 1,95mm.

La deuxième feuille de verre 1' notamment à base de silice, sodocalcique, de préférence silicosodocalcique (et comme la première feuille de verre), voire aluminosilicate, ou borosilicate présente une teneur pondérale en oxyde de fer total d'au moins 0,4% et de préférence d'au plus 1,5%. La deuxième feuille de verre peut présenter un rédox entre 0,22 et 0,35 ou 0,30.

On peut citer notamment les verres de la Demanderesse dénommés TSAnx (0,5 à 0,6% de fer), TSA2+, TSA3+ (0,8 à 0,9% de fer), TSA4+ (1% de fer), TSA5+, par exemple verts. On choisit un verre TSA3+ de 1,6mm.

La première-feuille de verre comporte, sur la face F2 un empilement 101 transparent à au moins une longueur d'onde dite de travail dans l'infrarouge comprise entre 800nm à 1800nm, notamment entre 850nm et 1600nm, avec une surface libre (non recouverte par l'intercalaire de feuilletage et la deuxième feuille de verre ou plastique) au moyen d'un trou traversant 4 dans l'épaisseur de la deuxième feuille de verre ou plastique donc trou délimité par les parois 40 et ici d'un trou traversant optionnel dit intercalaire délimité par les parois 40'.

Selon l'invention, dans une région centrale périphérique le long du bord longitudinal supérieur, le pare-brise comporte donc un trou traversant 4 dans l'épaisseur de la deuxième feuille de verre ou plastique 1' et éventuellement de l'intercalaire de feuilletage 3. Le système de vision infrarouge 7 est en vis-à-vis du trou traversant 4.

Comme montré en figures 1a à 1e, le trou 4 est ici trou fermé (entouré par la paroi de la feuille de verre), donc au sein du vitrage notamment -de section trapézoïdale ou rectangulaire (figure 1e) comportant :

- un premier grand côté ou bord longitudinal dit supérieur le plus proche de la tranche du bord longitudinal supérieur du vitrage 10-parallèle à cette tranche de longueur d'au plus 20cm par exemple 10,6cm et espacé d'au moins 5cm ou 6cm de la tranche
- un deuxième grand côté ou bord longitudinal dit inférieur (le plus éloigné de la tranche du bord longitudinal supérieur 10, proche de la zone centrale) parallèle au premier grand côté de longueur d'au plus 25cm ou 20cm par exemple 17,5cm et espacé d'au moins 5cm ou 6cm de la tranche
- de hauteur (entre les grands côtés) d'au moins 5cm ici de 10cm.

Le trou traversant peut être circulaire notamment s'il est de diamètre d'au plus 10cm, 8, 5, ou 2cm.

Le trou traversant 4 peut être alternativement une encoche donc un trou traversant débouchant de préférence côté toit.

Le trou traversant 4 peut être dans une autre région du pare-brise 100 (cf déporté vers un bord latéral 10' cf figure 1e qui présente deux zones possibles pour le trou 4), ou même dans un autre vitrage du véhicule en particulier la lunette arrière.

L'empilement 101 est également local. Ici il est de forme rectangulaire présent en face dudit trou 4 et dans une zone de bordure dudit trou par exemple ses bords dépassent au maximum de 10mm des parois délimitant le trou 4 entre la face F2 et F3.

Le pare-brise 100 comporte sur la face F2 12 une couche de masquage opaque par exemple noire 5, tel qu'une couche d'émail ou une laque, formant un cadre périphérique du parebrise (ou de la lunette) et dans la zone périphérique avec le trou traversant, ici zone centrale avec masquage plus étendu, il comporte une épargne 51' suffisamment grande pour ne pas gêner les performances du LIDAR 7 mais apte à masquer le boîtier 8 (plastique, métal etc) du LIDAR 7.

Le boitier 8 et même le LIDAR peut être fixé (collé etc) à une platine 8' trouée au droit dudit trou sur la face F4 par une colle 6 (et éventuellement au toit 9.

Ici, l'empilement 101 est sur la face F2 et recouvre un peu la couche de masquage 5 dans la zone de bordure du trou traversant 4 (zone 11') pour masquer ses bords. La couche de masquage 5 a un bord haut 50 et un bord bas 51 dans la zone centrale. Le bord bas 52 de la couche de masquage 5 de part et d'autre de la zone centrale est plus proche de la tranche 10.

L'empilement 101 comporte en partant de la face 12 F2 :

- une couche colorante 2 formant un filtre sélectif pour camoufler le trou 4 de l'extérieur en comblant au moins l'épargne 51' et au-delà
- une colle PSA 21 par exemple acrylate, déposée par voie liquide (avec liner de protection retiré) d'épaisseur de $10\,\mu m$
- un film PET transparent 20 avec un revêtement antireflet 22 à la longueur d'onde de travail.

On choisit par exemple un film AR dénommé DIAMOX AR1617 du fournisseur Diamondcoatings.

La couche colorante 2 est en un composé par exemple polymère comportant une matrice organique et un agent colorant de préférence organique dispersé dans ladite matrice ledit agent colorant absorbant la lumière située dans ledit domaine du visible et étant transparent à ladite longueur de travail.

L'agent colorant est choisi par exemple parmi le Sudan Black B® ou la Nigrosine Solvent black 5, et de préférence est le Sudan Black B®.

Le composé est choisi de préférence parmi des monomères, des oligomères, ou des polymères comprenant au moins une fonction méthacrylate, des époxydes, un vernis constitué de particules dispersées de PVB, latex, polyuréthane ou acrylate.

Pour l'efficacité du filtre sélectif en couche, on peut jouer sur l'épaisseur de couche ou le pourcentage massique d'agent colorant.

Le filtre sélectif (en couche) peut être moins de $100\,\mu m$ ou même $30\,\mu m$ (vernis etc). En face dudit trou traversant, le vitrage feuilleté présente :

- une transmission totale d'au moins 80%, 90%, ou 95% à la longueur d'onde de travail, mesurée à 90°

- une transmission totale d'au plus 10%, 5%, 1% ou 0,1% dans le visible.

Comme le montrent les figures 1b à 1e, en vue de l'extérieur il semble donc y avoir une couche noire (ou autre couleur) continue de masquage dans la zone rétroviseur (ou en bordure) et de part et d'autre dans la zone rétroviseur en forme d'une bande de masquage 50'.

Le filtre sélectif est défini par un L*1, a*1 b*1, définie dans l'espace chromatique L*a*b* CIE 1976. La couche de masquage de couleur C1 aussi est définie par un L*2, a*2 b*2 avec un écart colorimétrique $\Delta E^*$ donné par la formule suivante

$$\Delta E^* = \sqrt{(\Delta L^{*2} + \Delta a^{*2} + \Delta b^{*2})}.$$

De préférence Delta E*<4, mieux Delta E*<2 (l'œil humain discerne difficilement), encore mieux Delta E*<1 (l'œil humain ne discerne pas).

L'empilement 101 peut avoir la même forme 2a que le trou 4 : trapézoïdale (figure 1b) ou rectangulaire (figure 1e premier cas en bordure, figure 1c et 1d) englobant le trou (trapézoïdal ou en variante non montré circulaire).

L'épargne 51' peut avoir la même forme que le trou 4 : trapézoïdale (figure 1b, 1c) ou rectangulaire (figure 1d) englobant le trou (trapézoïdale ou en variante non montré circulaire).

L'épargne 51' est montré fermée mais peut être débouchante et comblée par la couche colorante 2.

Dans la figure 1e, la couche de masquage 5 ne comporte pas d'épargne (ni même de surépaisseur pour former la zone caméra(s). La couche colorante 2 est à proximité de préférence faiblement espacée pour maintenir si nécessaire une continuité de masquage.

La zone de la couche colorante peut être suffisamment étendue au-delà dudit trou traversant pour servir dans une zone caméra comportant un ou des capteurs.

Dans ce cas comme montré en figure 1d et 1e pour un besoin de transparence dans le visible de ces capteurs, l'empilement 101 (ou au moins la couche 2) est « patternée » (structurée) donc présente par exemple une première ouverture 24 pour une caméra visible et une autre ouverture 25 plus petite pour la caméra thermique ou encore d'autres capteurs (pluie, luminosité extérieure etc).

Le pare-brise 100 peut comporter un ensemble de fils métalliques quasi invisibles, par exemple de $50\mu$m qui sont mis en place par exemple sur la face FA ou FB côté face F3 de l'intercalaire de feuilletage 3 (sur toute la surface) en forme des lignes droites ou non. Ces fils peuvent être absents du trou traversant 4 s'ils nuisent au LIDAR.

Dans la vue de détail (figure 1') on voit que la face FA couvre la bordure de l'empilement sous la zone de bordure du trou traversant dans une zone 13'. Le trou traversant de l'intercalaire de feuilletage peut fluer de quelques mm.

Pendant la fabrication si l'empilement 101 est mince par exemple d'au plus 0,2mm on le PVB avec trou traversant (par exemple 0,38mm ou 0,76mm) est sur l'empilement et par fluage il vient en contact adhésif avec la face F2 et la tranche 2a de l'empilement (contact latéral).

La présence d'un film en face dudit trou traversant forme un élément de sécurité.

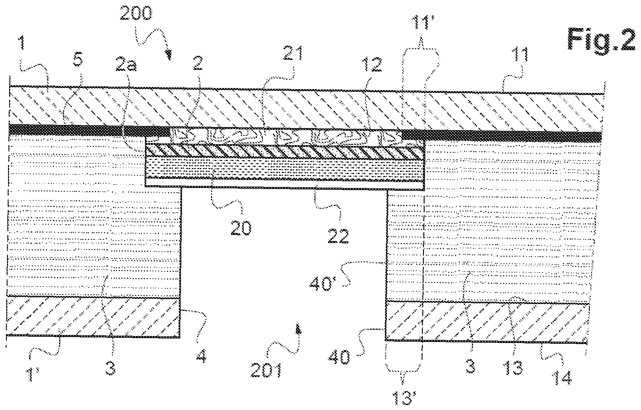

La figure 2 schématise en vue de coupe partielle et de détail autour du trou traversant d'un pare-brise 200 dans un deuxième mode de réalisation de l'invention.

L'empilement 201 diffère du précédent 101 en ce qu'il comporte un film sélectif c'est-à-dire un film transparent PET 20 porteur sur l'une au moins de ses faces principales ici orienté vers F2 de la couche colorante 2 déjà décrite.

Ce film sélectif est collé par une colle PSA acrylate 21 à la face F2.

La présence d'un film en face dudit trou traversant forme un élément de sécurité.

Sur la face opposée (orientée vers la face F3) le film Pet 20 de préférence comporte un revêtement AR 22 par exemple par alternance de couche haut et bas indice ou encore une couche poreuse notamment sol-gel de silice avec des particules creuses (de silice etc) .

Si l'empilement est assez mince (d'au plus $200\mu$m par exemple) il ne crée pas de surépaisseur gênante au moment du feuilletage.

Si l'empilement est plus épais on peut recourir à un premier PVB avec un premier trou traversant et un deuxième PVB (plus mince notamment) avant un deuxième trou traversant moins large pour couvrir la bordure de l'AR 22 (sans dépasser notablement en face dudit trou traversant de la deuxième feuille.

La figure 3 schématise en vue de coupe partielle et de détail autour du trou traversant d'un pare-brise 300 dans un troisième mode de réalisation de l'invention.

La figure 3' schématise en vue de face (côté habitacle) le pare-brise 300 de la figure 3. L'empilement 301 diffère du précédent 201 en ce qu'il est plus épais par exemple le film 20 a une fonction anticasse renforcé et est épais d'au moins 300 ou $400\mu$m.

Il différé aussi de l'empilement précédent en ce qu'il est lié dans la zone de bordure du trou traversant non pas par le PVB mais par une bande arrière 3' par exemple mince inférieure à 0,2mm, avec une tranche coté trou traversant 23, par exemple du PVB sans plastifiant sur tout le pourtour du trou traversant et en contact adhésif par sa tranche interne avec le PVB 3 (interface discernable par exemple). La bande avant a par exemple un contour rectangulaire englobant le trou traversant trapézoïdal (ou circulaire).

On peut préassembler film sélectif/bande avant formation de la structure feuilletée

La figure 4 schématise en vue de coupe partielle et de détail autour du trou traversant d'un pare-brise 400 dans un quatrième mode de réalisation de l'invention. L'empilement 401 diffère de l'empilement 301 en ce qu'il comporte un empilement de films polymère collés à la face F2 12 et collés entre eux par un adhésif PSA 21,21':

- le premier film est sélectif
- le deuxième film est un film AR 20', 22

Alternativement on choisit un film anticasse et un film sélectif.

Alternativement on choisit un film anticasse et un film AR.

Le PVB a une face principale FA 31 côté F2 12 et FB 32 coté F3 13.

La figure 5 schématise en vue de coupe partielle et de détail autour du trou traversant d'un pare-brise 500 dans un cinquième mode de réalisation de l'invention.

L'empilement 501 diffère de l'empilement 201 en ce que le premier film est sélectif en étant teinté en masse.

On peut souhaiter conserver la couche colorante si besoin.

Alternativement on utilise une bande arrière comme pour l'empilement précédent 401.

La figure 6 schématise en vue de coupe partielle et de détail autour du trou traversant d'un pare-brise 600 dans un sixième mode de réalisation de l'invention.

L'empilement 601 diffère de l'empilement 201 en ce que le premier film sélectif est collé à la face F2 par une bande avant 210 par exemple mince inférieure à 0,2mm par exemple du PVB sans plastifiant. La bande avant a une face 31' en contact adhésif avec la face 12.

On peut choisir le même (type) de PVB pour bande avant et arrière 3'.

La figure 6a schématise en vue de coupe partielle et de détail autour du trou traversant d'un pare-brise 600a dans une première variante du sixième mode de réalisation de l'invention.

L'empilement 601a diffère de l'empilement 601 en ce qu'il comporte deux films collés par une colle PSA 21' : le film sélectif 20 puis le film AR 20', 22.

La figure 6b schématise en vue de coupe partielle et de détail autour du trou traversant d'un pare-brise 600b dans une deuxième variante du sixième mode de réalisation de l'invention.

L'empilement 601b diffère de l'empilement 601 en ce qu'il comporte un film sélectif teinté en masse 2' toujours avec le revêtement antireflet 22 et la bande avant 210.

La figure 6c schématise en vue de coupe partielle et de détail autour du trou traversant d'un pare-brise 600c dans une troisième variante du sixième mode de réalisation de l'invention.

L'empilement 601c diffère de l'empilement 601 en ce qu'il comporte un film avec revêtement AR 22 avec sur la face côté face F2 12 la couche colorante 2.

La figure 7 schématise en vue de coupe partielle et de détail autour du trou traversant d'un pare-brise 700 dans un septième mode de réalisation de l'invention.

La figure 7' une vue de face partielle du pare-brise (côté habitacle) de la figure 7.

L'intercalaire PVB 3 est conservé dans la zone sous ledit trou traversant 4. Dans cette zone et en bordure, la face FA 31 est en contact avec la couche colorante 2 déposée sur la face F2 12 ou sur la face FA (encre). Dans cette zone et en bordure la face FB 32 est en contact adhésif avec un film AR porteur d'une bande arière 3' avec une tranche 23 et en contact adhésif avec la face F3 13 et dépassant de la tranche 2b du du film 20'.

La figure 8 schématise en vue de coupe partielle et de détail autour du trou traversant d'un pare-brise 800 dans un huitième mode de réalisation de l'invention.

L'empilement 801 diffère de l'empilement 701 en ce que la couche colorante 2 est déplacée côté face FB sous le film 20. La bande arrière n'est pas dépassante.

La figure 9 schématise en vue de coupe partielle et de détail autour du trou traversant d'un pare-brise 900 dans un neuvième mode de réalisation de l'invention.

L'empilement 901 est le même que l'empilement 801 mais le PVB est un tri couche PVB1 3b avec une tranche 40' coté trou du verre et la face 32/PET fonctionnel 20a avec une couche de contrôle solaire 5'/PVB2 3a avec une tranche 40' coté trou du verre et la face 31, PVB tri couche troué au droit dudit trou traversant et sa bordure côté face FB et en deçà du PET 20.

On pourrait rajouter pour plus de solidité une bande arrière.

La figure 9' schématise en vue de coupe partielle et de détail autour du trou traversant d'un pare-brise 900' dans une variante du neuvième mode de réalisation de l'invention. Le parebrise 900' diffère du parebrise 900 en ce que seul le PVB2 est la couche de contrôle solaire (côté face FB) est omise en face dudit trou traversant. Le PVB2 a été troué puis assemblé avec le Pet 20a déjà porteur de la couche sélective 2 et d'une surcouche AR 22.

## Revendications

1. Vitrage feuilleté de véhicule (100 à 900'), notamment routier ou ferroviaire, en particulier pare-brise, lunette arrière, d'épaisseur donnée, comportant :

 - une première feuille de verre (1) destinée à être le vitrage extérieur avec une première face principale externe F1 (11) et une deuxième face principale interne F2 (12)
 - un intercalaire de feuilletage (3) en matière polymère avec une face principale FA orientée vers F2 et avec une face principale FB opposée à FA, d'épaisseur E3 donnée
 - une deuxième feuille de verre ou plastique (1') destinée à être le vitrage intérieur avec une troisième face principale F3 (13) côté F2 et une quatrième face principale interne F4 (14)
 **caractérisé en ce que**
 - la première feuille de verre présente une teneur pondérale en oxyde de fer total d'au plus 0,05%
 - la deuxième feuille présente un trou traversant dans l'épaisseur, de largeur W1 au moins centimétrique

**EP 4 085 282 B1**

- le vitrage présente sous ledit trou traversant, du côté de la face F2, un filtre sélectif, absorbant dans le visible et transparent à au moins une longueur d'onde dite de travail dans l'infrarouge dans une gamme allant de 800nm à 1800nm,

en face dudit trou traversant, le vitrage feuilleté présente :

- une transmission totale d'au moins 80%, 90%, ou 95% à la longueur d'onde de travail, mesurée à 90°
- une transmission totale d'au plus 10%, 5%, ou 1% dans le visible.

2. Vitrage de véhicule selon la revendication 1, **caractérisé en ce que** le filtre sélectif s'étend au-delà dudit trou traversant, de l'extérieur prolonge une couche de masquage dudit vitrage ou masque une épargne d'une couche de masquage périphérique dudit vitrage, le filtre sélectif étant défini par un L*1, a*1 b*1 et la couche de masquage opaque étant définie par un L*2, a*2 b*2, de préférence l'écart colorimétrique ∆E* est <4 et même ∆E* est <2.

3. Vitrage feuilleté de véhicule selon l'une des revendications précédentes, **caractérisé en ce que** le filtre sélectif s'étend au-delà dudit trou traversant, notamment de l'extérieur prolonge une couche de masquage dudit vitrage ou masque une épargne d'une couche de masquage périphérique dudit vitrage, le filtre sélectif présente au moins une ouverture ou discontinuité locale pour laisser passer les rayons lumineux notamment pour au moins un capteur additionnel en particulier capteur d'une caméra visible ou caméra thermique, en particulier caméra fixée à une platine en face F4 platine trouée pour laisser passer lesdits rayons lumineux.

4. Vitrage feuilleté de véhicule selon l'une des revendications précédentes, **caractérisé en ce qu'**il comporte une couche de masquage opaque (5, 50, 51, 50', 52), notamment sous forme d'au moins un revêtement sur l'une au moins des première ou deuxième feuilles et/ou sur l'intercalaire de feuilletage, couche de masquage opaque périphérique et dans la région dudit trou traversant, la couche de masquage présentant une épargne (51') au droit dudit trou traversant et même éventuellement en bordure du trou traversant, en bordure du trou traversant le filtre sélectif étant en vis à vis de la couche de masquage opaque notamment avec un recouvrement de préférence sur au plus 50mm, ou est contigu, ou décalé d'au plus 150µm.

5. Vitrage feuilleté de véhicule selon l'une des revendications précédentes, **caractérisé en ce que** le filtre sélectif est en contact avec une couche de masquage qui est sous forme d'au moins un revêtement sur l'une au moins des première ou deuxième feuilles et/ou sur l'intercalaire de feuilletage et même le filtre sélectif est un revêtement sur la couche de masquage voire sous la couche de masquage.

6. Vitrage feuilleté de véhicule selon l'une des revendications précédentes, **caractérisé en ce que** la face F2 en regard de la zone dudit trou traversant et de préférence dans une zone de bordure dudit trou traversant comporte au moins un film polymère qui comporte au moins deux fonctions, de préférence une fonction par au moins un revêtement fonctionnel sur ledit film, fonctions choisies parmi les suivantes : filtre sélectif, chauffante, antireflet, anticasse.

7. Vitrage feuilleté de véhicule selon l'une des revendications précédentes, **caractérisé en ce que** l'intercalaire de feuilletage (3, 3a, 3b, 40', 40") présente un trou partiel ou traversant dans l'épaisseur faisant face audit trou traversant, éventuellement de taille inférieure d'au plus 5mm ou 2mm dans ledit trou traversant.

8. Vitrage feuilleté de véhicule selon l'une des revendications précédentes, **caractérisé en ce que** l'intercalaire de feuilletage est une multicouches qui comporte une première couche PVB en contact adhésif avec la face F2/ un film polymère formant ou faisant partie dudit filtre sélectif/ une deuxième couche PVB trouée au droit dudit trou traversant, le film polymère éventuellement étant porteur d'une couche de contrôle solaire en dehors dudit trou traversant.

9. Vitrage feuilleté de véhicule selon l'une des revendications précédentes, **caractérisé en ce que** le filtre sélectif comporte un film polymérique, notamment PET, de préférence d'épaisseur d'au plus 0,3mm ou 0,15mm, comportant :

- un agent colorant dans la masse, ledit agent colorant absorbant la lumière située dans ledit domaine du visible et étant transparent à ladite longueur de travail, et/ou
- revêtu d'une couche colorante en un composé comportant une matrice et un agent colorant dispersé dans ladite matrice ledit agent colorant absorbant la lumière située dans ledit domaine du visible et étant transparent à ladite longueur de travail.

26

**10.** Vitrage feuilleté de véhicule selon l'une des revendications précédentes, **caractérisé en ce que** le filtre sélectif comporte une couche colorante en un composé comportant une matrice et un agent colorant dispersé dans ladite matrice, ledit agent colorant absorbant la lumière située dans ledit domaine du visible et étant transparent à ladite longueur de travail, couche colorante formant dans la zone dudit trou un revêtement :

- sur la face F2, ou
- sur l'intercalaire de feuilletage, côté face FA ou FB, de préférence en PVB, en particulier encre comportant en outre des particules PVB, ou
- sur un film polymérique additionnel notamment PET sur une face principale côté F2 ou F3, d'épaisseur d'au plus 0,3mm ou 0,15mm de préférence liée à la face F2.

**11.** Vitrage feuilleté de véhicule selon l'une des revendications 9 ou 10, **caractérisé en ce que** le composé est polymérique, ou hybride organique minérale de la couche colorante, le polymère du composé est choisi de préférence parmi des monomères, des oligomères, ou des polymères de préférence comprenant au moins une fonction méthacrylate, des époxydes, ou un vernis constitué de particules dispersées de PVB, latex, polyuréthane ou acrylate.

**12.** Vitrage de véhicule selon l'une des revendications précédentes, **caractérisé en ce qu'**il comporte sur une surface libre d'un élément sous ledit trou traversant, un revêtement antireflet à au moins ladite longueur d'onde dite de travail dans l'infrarouge, avec une surface libre l'élément étant choisi parmi l'un au moins des éléments suivants :

- un film polymérique, notamment formant tout ou partie du filtre sélectif
- l'intercalaire de feuilletage
- une couche colorante dudit filtre sélectif.

**13.** Vitrage de véhicule selon l'une des revendications précédentes, **caractérisé en ce qu'**il comporte dans le trou traversant un insert, notamment en matière polymère.

**14.** Véhicule notamment autonome ou semi autonome incorporant le vitrage de véhicule selon l'une des revendications précédentes, notamment formant un parebrise.

**15.** Dispositif, notamment véhicule, **caractérisé en ce qu'**il comprend :

- ledit vitrage selon l'une des revendications précédentes de vitrage
- un système de vision infrarouge à ladite longueur d'onde de travail (7), tel qu'un LIDAR, disposé dans l'habitacle derrière ledit vitrage de façon à envoyer et/ou recevoir un rayonnement après traversée de la première feuille de verre au niveau dudit trou traversant.

**Patentansprüche**

**1.** Verbundverglasung (100 bis 900'), insbesondere für ein Straßen- oder Eisenbahnfahrzeug, im Besonderen eine Windschutzscheibe, eine Heckscheibe, mit gegebener Dicke, die aufweist:

- eine erste Glasscheibe (1), die dazu bestimmt ist, die Außenverglasung zu sein, mit einer ersten äußeren Hauptfläche F1 (11) und einer zweiten inneren Hauptfläche F2 (12)
- eine Verbundzwischenlage (3) aus Polymermaterial mit einer Hauptfläche FA, die F2 zugewandt ist, und mit einer Hauptfläche FB, die FA gegenüberliegt, mit gegebener Dicke E3
- eine zweite Glas- oder Plastikscheibe (1'), die dazu bestimmt ist, die Innenverglasung zu sein, mit einer dritten Hauptfläche F3 (13) auf der Seite von F2 und einer vierten inneren Hauptfläche F4 (14)
**dadurch gekennzeichnet, dass**
- die erste Glasscheibe einen Gewichtsgehalt an Gesamteisenoxid von höchstens 0,05 % vorweist
- die zweite Scheibe ein Durchgangsloch in der Dicke, mit Breite W1, mindestens im Zentimeterbereich vorweist
- die Verglasung unter dem Durchgangsloch, auf der Seite der Fläche F2, ein selektives Filter vorweist, das in dem sichtbaren Bereich absorbiert und bei mindestens einer sogenannten Arbeitswellenlänge in dem Infrarotbereich in einem Bereich von 800 nm bis 1800 nm transparent ist,

gegenüber dem Durchgangsloch, wobei die Verbundverglasung vorweist:

- eine Gesamttransmission von mindestens 80 %, 90 % oder 95 % bei der Arbeitswellenlänge, gemessen bei 90°
- eine Gesamttransmission von höchstens 10 %, 5 % oder 1 % in dem sichtbaren Bereich.

2. Fahrzeugverglasung nach Anspruch 1, **dadurch gekennzeichnet, dass** sich das selektive Filter über das Durchgangsloch hinaus erstreckt, von außen eine Maskierungsschicht der Verglasung verlängert oder eine Aussparung einer peripheren Maskierungsschicht der Verglasung maskiert, wobei das selektive Filter durch einen L*1, a*1 b*1 definiert ist und die undurchsichtige Maskierungsschicht durch einen L*2, a*2 b*2 definiert ist, vorzugsweise wobei der Farbunterschied ΔE* <4 ist und sogar ΔE* <2 ist.

3. Fahrzeugverbundverglasung nach einem der vorstehenden Ansprüche, **dadurch gekennzeichnet, dass** das selektive Filter sich über das Durchgangsloch hinaus erstreckt, insbesondere von außen eine Maskierungsschicht der Verglasung verlängert oder eine Aussparung einer peripheren Maskierungsschicht der Verglasung maskiert, wobei das selektive Filter mindestens eine lokale Öffnung oder Unstetigkeit zum Passierenlassen der Lichtstrahlen vorweist, insbesondere für mindestens einen zusätzlichen Sensor, im Besonderen den Sensor einer sichtbaren Kamera oder einer Wärmekamera, im Besonderen einer Kamera, die an einer Platte in der Fläche F4 befestigt ist, wobei die Platte zum Passierenlassen der Lichtstrahlen durchlöchert ist.

4. Fahrzeugverbundverglasung nach einem der vorstehenden Ansprüche, **dadurch gekennzeichnet, dass** sie eine undurchsichtige Maskierungsschicht (5, 50, 51, 50', 52) aufweist, insbesondere in Form von mindestens einer Beschichtung auf der mindestens einen der ersten oder der zweiten Scheibe und/oder auf der Verbundzwischenlage, wobei die undurchsichtige Maskierungsschicht peripher und in der Region des Durchgangslochs ist, wobei die Maskierungsschicht eine Aussparung (51') direkt unter dem Durchgangsloch und sogar gegebenenfalls an einer Grenze des Durchgangslochs vorweist, wobei an der Grenze des Durchgangslochs das selektive Filter vis-à-vis der undurchsichtigen Maskierungsschicht insbesondere mit einer Abdeckung vorzugsweise auf höchstens 50 mm ist oder aneinander angrenzend ist oder um höchstens 150 μm versetzt ist.

5. Fahrzeugverbundverglasung nach einem der vorstehenden Ansprüche, **dadurch gekennzeichnet, dass** das selektive Filter mit einer Maskierungsschicht in Kontakt ist, die in Form von mindestens einer Beschichtung auf der mindestens einen der ersten oder der zweiten Scheibe und/oder auf der Verbundzwischenlage ist und sogar das selektive Filter eine Beschichtung auf der Maskierungsschicht oder sogar unter der Maskierungsschicht ist.

6. Fahrzeugverbundverglasung nach einem der vorstehenden Ansprüche, **dadurch gekennzeichnet, dass** die Fläche F2 gegenüber der Zone des Durchgangslochs und vorzugsweise in einer Grenzzone des Durchgangslochs mindestens eine Polymerfolie aufweist, die mindestens zwei Funktionen aufweist, vorzugsweise eine Funktion durch mindestens eine Funktionsbeschichtung auf der Folie, wobei die Funktionen aus den folgenden Optionen ausgewählt sind: selektives, heizendes, entspiegelndes, Bruchschutzfilter.

7. Fahrzeugverbundverglasung nach einem der vorstehenden Ansprüche, **dadurch gekennzeichnet, dass** die Verbundzwischenlage (3, 3a, 3b, 40', 40") ein Teil- oder Durchgangsloch in der Dicke vorweist, die dem Durchgangsloch zugewandt ist, gegebenenfalls mit einer Größe von weniger als höchstens 5 mm oder 2 mm in dem Durchgangsloch.

8. Fahrzeugverbundverglasung nach einem der vorstehenden Ansprüche, **dadurch gekennzeichnet, dass** die Verbundzwischenlage eine Mehrfachschicht ist, die eine erste PVB-Schicht in Haftkontakt mit der Fläche F2/ eine Polymerfolie, die das selektive Filter ausbildet oder Teil davon ist/ eine durchlöcherte zweite PVB-Schicht direkt unter dem Durchgangsloch aufweist, wobei die Polymerfolie gegebenenfalls außerhalb des Durchgangslochs eine Sonnenschutzschicht trägt.

9. Fahrzeugverbundverglasung nach einem der vorstehenden Ansprüche, **dadurch gekennzeichnet, dass** das selektive Filter eine Polymerfolie umfasst, insbesondere PET, vorzugsweise mit Dicke von höchstens 0,3 mm oder 0,15 mm, die aufweist:

- ein farbgebendes Mittel in der Masse, wobei das farbgebende Mittel das Licht absorbiert, das in der sichtbaren Domäne gelegen ist, und bei der Arbeitslänge transparent ist, und/oder
- mit einer farbgebenden Schicht aus einer Verbindung beschichtet ist, die eine Matrix und ein farbgebendes Mittel aufweist, das in der Matrix dispergiert ist, wobei das farbgebende Mittel das Licht absorbiert, das in der sichtbaren Domäne gelegen ist, und bei der Arbeitslänge transparent ist.

10. Fahrzeugverbundverglasung nach einem der vorstehenden Ansprüche, **dadurch gekennzeichnet, dass** das selektive Filter eine farbgebende Schicht aus einer Verbindung aufweist, die eine Matrix und ein farbgebendes Mittel aufweist, das in der Matrix dispergiert ist, wobei das farbgebende Mittel das Licht absorbiert, das in der sichtbaren Domäne gelegen ist, und bei der Arbeitslänge transparent ist, wobei die farbgebende Schicht in der Zone des Lochs eine Beschichtung ausbildet:

- auf der Fläche F2, oder
- auf der Verbundzwischenlage, auf der Seite der Fläche FA oder FB, vorzugsweise aus PVB, im Besonderen Tinte, die ferner PVB-Partikel aufweist, oder
- auf einer zusätzlichen Polymerfolie, insbesondere PET auf einer Hauptfläche auf der Seite von F2 oder F3, mit Dicke von höchstens 0,3 mm oder 0,15 mm, vorzugsweise mit der Fläche F2 verbunden.

11. Fahrzeugverbundverglasung nach einem der Ansprüche 9 oder 10, **dadurch gekennzeichnet, dass** die Verbindung polymer oder ein organischanorganischer Hybrid der farbgebenden Schicht ist, wobei das Polymer der Verbindung vorzugsweise aus Monomeren, Oligomeren oder Polymeren, vorzugsweise umfassend mindestens eine Methacrylatfunktion, Epoxiden oder einem Lack ausgewählt ist, der aus dispergierten PVB-, Latex-, Polyurethan- oder Acrylatpartikeln besteht.

12. Fahrzeugverglasung nach einem der vorstehenden Ansprüche, **dadurch gekennzeichnet, dass** sie auf einer freien Oberfläche eines Elements unter dem Durchgangsloch eine Beschichtung aufweist, die bei mindestens der sogenannten Arbeitswellenlänge in dem Infrarotbereich entspiegelnd ist, mit einer freien Oberfläche wobei das Element aus mindestens einem der folgenden Elemente ausgewählt ist:

- einer Polymerfolie, die insbesondere das gesamte oder einen Teil des selektiven Filters ausbildet
- der Verbundzwischenlage
- einer farbgebenden Schicht des selektiven Filters.

13. Fahrzeugverglasung nach einem der vorstehenden Ansprüche, **dadurch gekennzeichnet, dass** sie in dem Durchgangsloch einen Einsatz aufweist, insbesondere aus polymerem Material.

14. Insbesondere autonomes oder halbautonomes Fahrzeug, das die Fahrzeugverglasung nach einem der vorstehenden Ansprüche einschließt, die insbesondere eine Windschutzscheibe ausbildet.

15. Vorrichtung, insbesondere für ein Fahrzeug,
**dadurch gekennzeichnet, dass** sie umfasst:

- die Verglasung nach einem der vorstehenden Ansprüche der Verglasung
- ein System für Infrarotsicht bei der sogenannten Arbeitswellenlänge (7), wie zum Beispiel ein LIDAR, das in dem Fahrgastraum hinter der Verglasung angeordnet ist, um Strahlung zu senden und/oder zu empfangen, nachdem die erste Glasscheibe an dem Durchgangsloch durchdrungen wurde.

## Claims

1. A laminated glazing for a vehicle (100 to 900'), in particular a road or rail vehicle, especially a windshield or a back window, of given thickness, comprising:

- a first glass sheet (1) intended to be the exterior glazing with a first external main face F1 (11) and a second internal main face F2 (12)
- a lamination interlayer (3) made of polymer material with a main face FA oriented toward F2 and with a main face FB opposite to FA, of given thickness E3
- a second glass or plastic sheet (1') intended to be the interior glazing with a third main face F3 (13), F2 side, and a fourth internal main face F4 (14)

**characterized in that**:

- the first glass sheet exhibits a content by weight of total iron oxide of at most 0.05%,
- the second sheet exhibits a traversing hole in the thickness, with a width W1 which is at least centimetric,
- the glazing exhibits, under said traversing hole on the side of the face F2, a selective filter which absorbs in the visible region and which is transparent at at least one "working" wavelength in the infrared region in a range extending from 800 nm to 1800 nm,

opposite said traversing hole, the laminated glazing exhibits:

- a total transmission of at least 80%, 90% or 95% at the working wavelength, measured at 90°
- a total transmission of at most 10%, 5%, or 1% in the visible region.

2. The vehicle glazing as claimed in claim 1, **characterized in that** the selective film extends beyond said traversing hole, from the outside extends a masking layer for said glazing or masks a gap in a peripheral masking layer of said glazing, the selective filter being defined by an L*1, a*1, b*1 and the opaque masking layer being defined by an L*2, a*2, b*2, preferably the colorimetric difference ∆E* is < 4 and even ∆E* is < 2.

3. The vehicle laminated glazing as claimed in either of the preceding claims, **characterized in that** the selective filter extends beyond said traversing hole, in particular from the outside extends a masking layer for said glazing or masks a gap in a peripheral masking layer of said glazing, the selective filter exhibits at least one local opening or discontinuity to allow the passage of the light rays, in particular for at least one additional sensor, especially sensor of a visible camera or thermal camera, especially camera fixed to a plate on face F4, plate holed in order to allow the passage of said light rays.

4. The vehicle laminated glazing as claimed in one of the preceding claims, **characterized in that** it comprises an opaque masking layer (5, 50, 51, 50', 52), in particular in the form of at least one coating on one at least of the first and second sheets and/or on the lamination interlayer, peripheral opaque masking layer and in the region of said traversing hole, the masking layer exhibiting a gap (51') in line with said traversing hole and even optionally along the edge of the traversing hole, along the edge of the traversing hole the selective filter being opposite the opaque masking layer, in particular with an overlap preferably over at most 50 mm, or is contiguous, or offset by at most 150 μm.

5. The vehicle laminated glazing as claimed in one of the preceding claims, **characterized in that** the selective filter is in contact with a masking layer which is in the form of at least one coating on one at least of the first or second sheets and/or on the lamination interlayer and even the selective filter is a coating on the masking layer, indeed even under the masking layer.

6. The vehicle laminated glazing as claimed in one of the preceding claims, **characterized in that** the face F2 opposite the zone of said traversing hole and preferably in a border zone of said traversing hole comprises at least one polymer film which comprises at least two functions, preferably a function by at least one functional coating on said film, functions chosen from the following: selective filter, heating, antireflection, breakage-prevention.

7. The vehicle laminated glazing as claimed in one of the preceding claims, **characterized in that** the lamination interlayer (3, 3a, 3b, 40', 40") exhibit a partial or traversing hole in the thickness facing said traversing hole, optionally with a size of less than at most 5 mm or 2 mm in said traversing hole.

8. The vehicle laminated glazing as claimed in one of the preceding claims, **characterized in that** the lamination interlayer is a multilayer which comprises a first PVB layer in adhesive contact with the face F2/a polymer film forming or forming part of said selective filter/a second PVB layer holed in line with said traversing hole, the polymer film optionally carrying a solar control layer apart from said traversing hole.

9. The vehicle laminated glazing as claimed in one of the preceding claims, **characterized in that** the selective filter comprises a polymeric film, in particular PET film, preferably with a thickness of at most 0.3 mm or 0.15 mm, comprising:

- a bulk-coloring agent, said coloring agent absorbing the light located in said visible region and being transparent at said working wavelength, and/or
- coated with a coloring layer made of a compound comprising a matrix and a coloring agent dispersed in said matrix, said coloring agent absorbing the light located in said visible region and being transparent at said working wavelength.

10. The vehicle laminated glazing as claimed in one of the preceding claims, **characterized in that** the selective filter comprises a coloring layer made of a compound comprising a matrix and a coloring agent dispersed in said matrix, said coloring agent absorbing the light located in said visible region and being transparent at said working wavelength, coloring layer forming, in the zone of said hole, a coating:

- on the face F2, or
- on the lamination interlayer, side of face FA or FB, preferably made of PVB, in particular ink additionally comprising PVB particles, or
- on an additional polymeric film, in particular PET film, on a main face, side F2 or F3, with a thickness of at most 0.3 mm or 0.15 mm, preferably bonded to the face F2.

11. The vehicle laminated glazing as claimed in either of claims 9 and 10, **characterized in that** the compound of the coloring layer is polymeric or organic/inorganic hybrid, the polymer of the compound is preferably chosen from monomers, oligomers, or polymers preferably comprising at least one methacrylate functional group, epoxides, or a varnish consisting of dispersed PVB particles, latex, polyurethane or acrylate.

12. The vehicle glazing as claimed in one of the preceding claims, **characterized in that** it comprises, on a free surface of an element under said traversing hole, a coating antireflective at least said "working" wavelength in the infrared region, with a free surface
the element being chosen from one at least of the following elements:

- a polymeric film, in particular forming all or part of the selective filter
- the lamination interlayer
- a coloring layer of said selective filter.

13. The vehicle glazing as claimed in one of the preceding claims, **characterized in that** it comprises, in the traversing hole, an insert, in particular made of polymer material.

14. A vehicle, in particular an autonomous or semiautonomous vehicle, incorporating the vehicle glazing as claimed in one of the preceding claims, in particular forming a windshield.

15. A device, in particular vehicle, **characterized in that** it comprises:

- said glazing as claimed in one of the preceding glazing claims
- a system for infrared viewing at said working wavelength (7), such as a LIDAR, positioned in the passenger compartment behind said glazing so as to send and/or receive radiation after passing through the first glass sheet at the level of said traversing hole.

Fig.1

## Fig.1'

## Fig.1a

Fig.1b

Fig. 1c

Fig.1d

EP 4 085 282 B1

Fig.1e

EP 4 085 282 B1

Fig.2

Fig.3

Fig.3'

Fig.4

Fig.5

Fig.6

Fig.6a

**Fig.6b**

**Fig.6c**

Fig.7

Fig.7'

Fig.8

Fig.9

Fig.9'

**EP 4 085 282 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 20180153012 A
- US 2019039353 A1
- WO 9307329 A
- US 5162046 A
- US 20040258929 A
- WO 2005049757 A
- EP 1329433 A
- WO 2008059170 A
- US 6132882 A
- WO 04025334 A